# EUROPEAN PATENT SPECIFICATION

(11) **EP 4 361 975 B1**
(45) Date of publication and mention of the grant of the patent: **04.03.2026**
(21) Application number: 22203634.5
(22) Date of filing: 25.10.2022
(51) Int. Cl.: G07C 5/08, G06F 16/907

(54) **COMPUTER SYSTEM FOR STORING DATA**
COMPUTERSYSTEM ZUR DATENSPEICHERUNG
SYSTÈME INFORMATIQUE POUR STOCKER DES DONNÉES

(43) Date of publication of application: 01.05.2024
(73) Proprietor: Aptiv Technologies AG, 8200 Schaffhausen (CH)
(72) Inventor: KIPPERT, Stefan, 42289 Wuppertal (DE); CREMER, Peet, 40239 Düsseldorf (DE); GEBHARDT, Patrik, 58332 Schwelm (DE); KONRAD, Thomas, 58332 Schwelm (DE); SCHUGK, Daniel, 51467 Bergisch Gladbach (DE)
(74) Representative: Manitz Finsterwald Patent- und Rechtsanwaltspartnerschaft mbB

(56) References cited:
- WO-A1-2022/046469
- US-A1- 2020 364 953
- US-B2- 9 098 956
- ANONYMOUS: "nuScenes", 15 June 2021 (2021-06-15), XP93028743, Retrieved from the Internet <URL:https://web.archive.org/web/20210615132757/https://www.nuscenes.org/nuscenes> [retrieved on 20230303]
- ANONYMOUS: "nuscenes tutorial", 25 September 2020 (2020-09-25), XP93028849, Retrieved from the Internet <URL:https://github.com/nutonomy/nuscenes-devkit/blob/master/python-sdk/tutorials/nuscenes_tutorial.ipynb> [retrieved on 20230303]
- HOLGER CAESAR ET AL: "nuScenes: A multimodal dataset for autonomous driving", ARXIV.ORG, CORNELL UNIVERSITY LIBRARY, 201 OLIN LIBRARY CORNELL UNIVERSITY ITHACA, NY 14853, 26 March 2019 (2019-03-26), XP081657750
- KEENAN BURNETT ET AL: "Boreas: A Multi-Season Autonomous Driving Dataset", ARXIV.ORG, CORNELL UNIVERSITY LIBRARY, 201 OLIN LIBRARY CORNELL UNIVERSITY ITHACA, NY 14853, 18 March 2022 (2022-03-18), XP091193122
- MATTHEW PITROPOV ET AL: "Canadian Adverse Driving Conditions Dataset", ARXIV.ORG, CORNELL UNIVERSITY LIBRARY, 201 OLIN LIBRARY CORNELL UNIVERSITY ITHACA, NY 14853, 27 February 2020 (2020-02-27), XP081907090, DOI: 10.1177/0278364920979368
- ANDREW KRAMER ET AL: "ColoRadar: The Direct 3D Millimeter Wave Radar Dataset", ARXIV.ORG, CORNELL UNIVERSITY LIBRARY, 201 OLIN LIBRARY CORNELL UNIVERSITY ITHACA, NY 14853, 8 March 2021 (2021-03-08), XP081907356

## Description

### FIELD

The present disclosure relates to a computer system for storing data of driver-assistance systems of vehicles.

### BACKGROUND

A data warehouse may store predigested and searchable information for an easy access of the data for consumers. The data warehouse may use a database backend together with data schema definitions to store the predigested information in a ready-to-use format.

Databases are used in many applications, one of them for example as a backend for advanced driver-assistance systems (ADAS), wherein data stored in the database may come from vehicle recording drives and/or machine learning (ML) algorithm training and validation. This may not only be true for training new artificial intelligence (AI) methods but also for verification of algorithms or vehicle functions using resimulations of certain scenes. In the automotive industry it is also required to proof that the algorithm works flawless on huge amounts of driven kilometers (e.g. 50.000 km) for certain scenarios and scenes.

Therefore, it may not only be important what data to store, but also in what format the data is stored, such that ML training and verification becomes possible for requested scenes and scenarios.

Accordingly, there is a need for a system having a uniform format in the form of a schema or a defined entity structure for storing data of driver-assistance systems of vehicles.
"nuScenes", 15 June 2021, XP93028743, retrieved from the Internet: URL:
   https://web.archive.orq/web/20210615132757/https://www.nuscenes.orq/nuscenes discloses a public, large-scale dataset for autonomous driving. The data is gathered from a vehicle equipped with a full sensor suite, including LIDAR, radar, and camera sensors. The data is stored in a database with a defined schema including several linked tables or entities, such as a log entity, a scene entity, and a sample entity, for the purpose of providing data for developing and testing autonomous driving algorithms.
"nuscenes tutorial", 25 September 2020, XP93028849, retrieved from the Internet:
   URL: https://qithub.com/nutonomy/nuscenes-devkit/blob/master/python-sdk/tutorials/nuscenes_tutorial.ipynb is a technical tutorial and documentation for the nuScenes dataset described above. It provides a more detailed explanation of the database schema, illustrating the specific relationships and foreign key links between the various tables (entities) that store the sensor and vehicle data.

US 2020/364953 A1 discloses a system and method for managing vehicle data, in particular a system architecture including a "data orchestrator" located on the vehicle. The orchestrator uses rules and predictive models to manage the transmission of vehicle data, determining what data to send from the vehicle to a remote entity, such as a cloud data center, and when to send it.

### SUMMARY

The present disclosure provides a computer system according to the independent claim 1.

Embodiments are given in the subclaims, the description and the drawings.

In one aspect, the present disclosure is directed at a computer system for storing data of driver-assistance systems of vehicles. The system comprises: a database storing a plurality of entities that define a schema of the system, the plurality of entities comprising: a sensor entity, wherein the sensor entity is configured to store, for each of at least one sensor mounted on a vehicle, respective sensor configuration data comprising a respective sensor identifier; a vehicle entity, wherein the vehicle entity is configured to store, for each of at least one vehicle, respective vehicle configuration data comprising a respective vehicle identifier and a reference to at least one sensor identifier; a log entity, wherein the log entity is configured to store, for each of at least one log, respective logging configuration data comprising a respective log identifier and a reference to at least one vehicle identifier; a stream entity, wherein the stream entity is configured to store, for each of at least one stream, respective stream configuration data comprising a respective stream identifier, and a reference to at least one log identifier, wherein at least one of the streams is a sensor stream, wherein the stream configuration data of the sensor stream further comprises a reference to at least one sensor identifier, wherein at least one of the streams is a dependent stream, wherein the respective stream configuration data of each dependent stream further comprises a respective reference to at least one other stream; a sample entity, wherein the sample entity is configured to store, for each of at least one sample, respective sample configuration data, comprising a respective sample identifier and a reference to at least one stream identifier; an algorithm entity, wherein the algorithm entity is configured to store, for each of at least one algorithm, respective algorithm configuration data comprising an algorithm identifier, wherein at least one of the dependent streams is an algorithm stream, wherein the stream configuration data of the algorithm stream further comprises a reference to at least one algorithm identifier, and wherein the algorithm entity is stored in the database; and at least one validator, wherein the at least one validator comprises a pre-hook and/or a post-hook, wherein the pre-hook and/or the post-hook is a function that is automatically executed in response to a database operation on at least one of the stored entities, wherein the sensor configuration data, the vehicle configuration data, the logging configuration data, the stream configuration data, and the sample configuration data is used for driver-assistance systems.

A non-restrictive example for the computer system may be a 360° birds eye surround parking system using cameras. To enable a 360° view, multiple cameras may be installed externally on a vehicle, e.g. at the front, left, right and rear bumpers. In this use-case, the sensor entity may have four sensor entries, wherein the sensor configuration data of the sensor entity may comprise a sensor type identifier of type camera sensor type for each of the four sensor entries. Each of the sensor configuration data (or sensor entries) may store intrinsic calibration values for the respective sensor. Additionally, the vehicle configuration data of the vehicle entity may comprise at least a unique vehicle identifier of the vehicle and a reference to each of the sensors using the unique sensor identifier for each of the sensors. Furthermore, the vehicle configuration data may comprise vehicle sensor calibration data storing extrinsic mounting positions and orientations for each of the sensors, defining the current status of the vehicle sensor setup as it may be in real world.

The 360° birds eye surround parking system may be extended with an alarm system that may detect pedestrians in the near vicinity of the vehicle and may warn a driver of the vehicle accordingly. Data captured by each of the cameras installed on the vehicle may be recorded at a specific time for one minute each, wherein recordings of the camera images may feature pedestrians in different situations. Each of these four different recordings may be stored as a separate sensor stream in the stream entity. A reference may be provided to each of the sensor streams from respective samples containing atomic camera samples. The sample configuration data of each sample may comprise a reference to a respective one of the four sensor streams. The stream configuration data of the stream entity may comprise a reference to a log identifier for each of the four different sensor streams. Each of the log identifiers may represent a log, comprising a reference to the vehicle identifier.

Each of the sensor streams may refer to the respective sensor entry using a reference to the unique sensor identifier for each of the sensors. Additionally, each of the sample entries may have a Coordinated Universal Time (UTC) timestamp that may be used to synchronize the data with, as well meta information about the camera images, like the width and height of a camera image. All samples of the sample entity may refer to their respective streams of the stream entity using a reference to a unique respective stream identifier. Data captured by each of the cameras may be stored as binary data in a different storage for cost efficiency and may also be referenced by the respective sample.

During development, manual annotation that may serve as ground truth information may have been created for some of the above recordings. Using new streams, for example annotation streams, containing bounding box labels for each object, the sample entries may be stored in the database in a similar way. The new streams may be labeled as dependent annotation streams and may refer to their respective camera stream accordingly. Similarly, developers may develop machine learning models using the recorded camera images and annotations, creating algorithm streams for comparison and training in a similar fashion.

Finally, the 360° camera system may be updated with the developed pedestrian detection model and may also warn the driver about close-by pedestrians.

Driver-assistant systems or advanced driver-assistant systems (ADAS) may be any technology that assist drivers of a car, for example, in driving and parking the car. ADAS may use at least one sensor like a camera sensor, a radar sensor, a lidar sensor, a Global Positioning System (GPS) sensor, or an inertial measurement unit (IMU) to collect data of the vehicle or an environment of the vehicle. The data may be stored in a storage to further analyze the data, for example using an algorithm, or the data may be evaluated directly to support the driver and thus, helps to increase vehicle safety or road safety.

Vehicles as described herein may be any kind of road transportation machine, for example a car, a truck, a bus, and the like, but also a motorcycle, a scooter or any other motorized machine that transports people or cargo on a road.

The computer system for storing data of driver-assistance systems of vehicles as described herein may include a defined schema, wherein the defined schema comprises a plurality of entities that are connected in a specific way. An entity may be a defined electronic container or a virtual unit that may be configured to store data in a (pre-)defined data structure. Each of the plurality of entities may be configured to store data with a (pre-)defined data structure and each of the plurality of entities may be connected or linked to at least one other of the plurality of entities in a (pre-)defined way.

The sensor entity of the system is configured to store sensor data of a sensor mounted on the vehicle. The sensor data may comprise sensor configuration data that may define or describe the sensor that is mounted on the vehicle. The sensor configuration data may comprise, for example a type of sensor (e.g. a radar sensor, a lidar sensor, a camera sensor, etc.) or any other kind of specification of the sensor. Each of the sensors may be identified by a unique sensor identifier. The sensor identifier may also be used to link or connect the sensor configuration data and therefore the sensor entity to other entities of the system, for example, the vehicle entity of the system may be connected or linked to the sensor entity of the system by a reference to at least one sensor identifier. The vehicle entity of the system may be configured to store vehicle data for each of a plurality of vehicles that may collect data for driver-assistance systems.

Similar to the sensor data, the vehicle data may comprise vehicle configuration data that specifies each of the plurality of vehicles that collects measurement data using sensors mounted on each of the plurality of vehicles. The vehicle configuration data may comprise a unique vehicle identifier for each of the vehicles, wherein each of the vehicles may be identified by its respective vehicle identifier. The vehicle identifier may also be used to link or connect the vehicle configuration data and therefore the vehicle entity to other entities of the system, for example, the log entity of the system may be connected or linked to the vehicle entity of the system by a reference to at least one vehicle identifier. Since the log entity of the system is linked to the vehicle entity of the system via the reference to at least one vehicle identifier, the log entity is also implicitly connected or linked to the sensor entity of the system via the reference to at least one sensor identifier.

The log entity of the system is configured to store logging configuration data of at least one log, wherein each log may be identified by a unique log identifier stored in the logging configuration data. The log identifier may also be used to link or connect the logging configuration data and therefore the log entity to other entities of the system, for example, the stream entity of the system may be connected or linked to the log entity of the system by a reference to at least one log identifier. Since the stream entity of the system is linked to the log entity of the system via the reference to at least one log identifier, the stream entity is also implicitly connected or linked to the vehicle entity of the system via the reference to at least one vehicle identifier. Logging data may be helpful to rebuild or resimulate data of the system since the logging configuration data may store directly or by references data for each of a plurality of recording drives. The logging configuration data may define or describe a vehicle and implicitly at least one sensor mounted on the vehicle from which the data of the recording drive comes from.

The stream entity of the system is configured to store stream data for each of at least one stream. The stream data for each stream may be stream configuration data that may describe what kind of data is stored and for what sensor or algorithm. Each stream may be identified by a unique stream identifier. The stream identifier may also be used to link or connect the stream configuration data and therefore the stream entity to other entities of the system, for example, the sample entity of the system may be connected or linked to the stream entity of the system by a reference to at least one stream identifier. There may be different kinds of streams, for example a sensor stream, an algorithm stream and/or an annotation stream.

The algorithm stream and the annotation stream may be dependent streams, since they may depend on another stream or sensor measurement data or manual user input respectively. If the stream is a dependent stream, then the stream configuration data of the dependent stream comprises a reference to at least one further stream. Thus, the stream configuration data and therefore the stream entity is also linked or connected to a further stream by the reference to at least one stream identifier.

If the stream is a sensor stream, then the stream configuration data of the sensor stream comprises a reference to at least one sensor identifier. Thus, the stream configuration data and therefore the stream entity may be also linked or connected to the sensor entity of the system by the reference to at least one sensor identifier.

The sample entity of the system is configured to store sample configuration data. The sample configuration data may comprise actual sensor data or algorithm data or an information where the actual sensor data or algorithm data may be stored, for example, a URL address of an external storage component. To link or connect the sample entity or data of the sample entity, each sample has a unique sample identifier.

According to an embodiment, the database is a NoSQL database, preferably a MongoDB database. The entities and the specific connection of the entities using references to identifiers stored in the configuration data of each entity may define the schema of the system as described herein. Since the sensor entity, the vehicle entity, the log entity, the sample entity, and the stream entity may be stored in a database, the schema may define a structure of the database. In other words, the term "schema" may refer to an organization of data as a blueprint of how the database is constructed. The database may be a NoSQL database which may be a "not only" Structured Query Language (SQL) database or a "non-relational" database. NoSQL databases may be more scalable und may provide better performance compared to relational databases. MongoDB database may be a NoSQL database for working with large sets of distributed data, wherein the MongoDB database may have a flexible data model that may enable storing unstructured data.

According to an embodiment, the sensor configuration data may further comprise at least one of: sensor name data, sensor number data, sensor hardware data, sensor software data, sensor time data, sensor sample-type data, sensor status data, and/or sensor calibration data. The sensor configuration data may comprise a plurality of data specifying the at least one sensor mounted on at least one vehicle. The sensor configuration data may comprise any kind of data that may describe the at least one sensor.

According to an embodiment, the vehicle configuration data may further comprise at least one of: vehicle name data, vehicle identification data, vehicle time data, vehicle sensor data, vehicle sensor calibration data, vehicle sensor calibration status data, vehicle sensor connection data, vehicle dimension data, and/or vehicle coordinate system data. The vehicle configuration data may comprise a plurality of data specifying at least one vehicle that may collect data used for driver-assistance systems. The vehicle configuration data may comprise any kind of data that may describe the at least one vehicle.

According to an embodiment, the logging configuration data may further comprise at least one of: logging origin data, logging start time data, logging end time data, and/or logging status data. The logging configuration data may comprise a plurality of data specifying at least one log that may describe a single recording drive done with at least one vehicle. The logging configuration data may comprise any kind of data that may describe the at least one log of a recording drive of the vehicle.

According to an embodiment, the stream configuration data may further comprise at least one of: stream sample data, stream status data, stream duration data, stream start time data and/or stream end time data. The stream configuration data may comprise a plurality of data specifying at least one stream that may describe what kind of data, for example of a recording drive, is stored and for what sensor or algorithm. The stream configuration data may comprise any kind of data that may describe the at least one stream.

According to an embodiment, the sample configuration data further comprises sample time data. The sample configuration data may comprise a plurality of data specifying at least one sample that may comprise sensor data or algorithm data. The sample configuration data may comprise any kind of data that may describe the at least one sample.

According to an embodiment, at least two of the sensor configuration data, the vehicle configuration data, the logging configuration data, the stream configuration data, and the sample configuration data may comprise a common timestamp and may be synchronized using the common timestamp. The common timestamp may be a Universal Time Coordinated (UTC) timestamp. The UTC timestamp may be a precise time standard. A synchronization of raw sensor data may also be possible using the UTC timestamp. The synchronization may be more important to atomic data entries, meaning samples. This may count for sensor data as well as algorithmic data. The logging configuration data may comprise logging start time data that may also be the same UTC timestamp. All timestamps that may be stored in the database may be UTC based. Thus, queries that may be based on a timestamp may be compared between data entries.

According to an embodiment, each of the sensor entity, the vehicle entity, the log entity, the sample entity, and the stream entity may comprise at least one index, wherein the at least one index may be used to query and/or order the sensor configuration data, the vehicle configuration data, the logging configuration data, the sample configuration data, and the stream configuration data respectively. The at least one index may be a special data structure that may store a value of a specific field, ordered by the value of the field. The specific field may comprise data of the sensor configuration data, the vehicle configuration data, the logging configuration data, the stream configuration data, and/or the sample configuration data. The at least one index may support an efficient execution of queries, particularly in a MongoDB database, by limiting the number of documents (or configuration data of the entities) that may have to be inspected for the queries. Ordering of the sensor configuration data, the vehicle configuration data, the logging configuration data, the sample configuration data, and the stream configuration data respectively may be important when looking at scenes recorded in a vehicle. Users may often want to download partial data of a scene, or all data of a stream. That may mean if an index may be used to order the data by, for example, a timestamp and a stream index, the data may be found faster if the database may lookup the data. Also, an "offset" parameter may be used to create batches for data downloads. For example, a camera stream may be recorded at 10 frames per second for one minute. If the samples may be sorted by a timestamp, one may query for all samples of a stream and add the option of offset = 10, to basically skip the first second of the recording and query for the data from the 2nd second onwards. Algorithmically, one may loop over the frame rate and simply request the batches for one second of raw data one by one without the server having to lookup all data first, or returning the data in a random order (for example, 5 samples from the end, 5 from the front and so on, if no sorting or ordering would have been done at all).

According to an embodiment, at least one of the samples may be a binary sample, wherein the sample configuration data of the binary sample may comprise a reference to binary data of the at least one sensor, preferably measurement data of the at least one sensor and wherein the sample configuration data may comprise a sample type identifier. Binary data may be data in a binary digital form, represented in a series of bits. Bits may be a basic measurement unit of data that may store only two possible states, 0 and 1. Measurement data may be data captured by the at least one sensor mounted on the vehicle, for example, lidar pointclouds of a lidar sensor, radar datacubes of a radar sensor and/or camera images of a camera sensor. The measurement data of the vehicle may be stored in binary data format in the sample entity of the database or in a different storage component. Binary samples may offer additional information regarding hybrid data storage, for example a Uniform Resource Locator (URL) information where the binary data may be stored, a size of the data that may be stored, or a MD5 sum value. The MD5 sum value may be a check-sum, for example a 32-character hexadecimal number that may be computed on a file. If two files may have the same MD5 checksum value, then there may be a high probability that the two files are the same. Furthermore, binary samples may offer the ability to separate meta data and binary data. The sample type identifier may be an identifier for each sample that may define the sample type of each sample. Besides a binary sample type, there may be also, for example, a Boolean sample type, a statistic sample type, a key point information (KPI) sample type, an annotation sample type, and others. The methods and systems described herein may not be restricted to sample types described herein. Sample types of a sample may be extendable with whatever might be coming up or is needed in the future. A detailed description of sample types will follow further below.

According to an embodiment, at least one portion of the binary data may be stored in a storage component different to the database, wherein preferably the storage component is a cloud storage. The storage component may be a blob (binary large object) storage, wherein the blob storage may be suitable for storing unstructured data. The storage component different to the database, for example the cloud storage or a separate disk may be accessible via a web interface. Storing binary data outside the database may safe costs for storage space since blob storage may be cheaper than database storage.

According to an embodiment, the sample configuration data of the binary sample may further comprise at least one of: binary name data, binary address data, binary type data, binary check data, binary size data, binary status data, binary compress data, binary compress check data, and/or binary compress size data. The sample configuration data of the binary sample may comprise a plurality of data specifying the binary sample. The sample configuration data of the binary sample may comprise any kind of data that may describe the binary sample.

According to an embodiment, the sample type identifier may comprise at least one of: BSON sample type, bounding box sample type, Compressed Data Cube (CDC) sample type, camera sample type, cuboid sample type, custom sample type, egomotion sample type, GPS sample type, host sample type, lane sample type, pointcloud sample type, radar sample type, semantic segmentation sample type, and/or video sample type. The sample type identifier may comprise a plurality of types specifying at least one sample. The sample type identifier may comprise any type that may describe the at least one sample. A description of the sample type identifier will follow bellow.

According to an embodiment, the sensor configuration data may further comprise a sensor type identifier, wherein the sensor type identifier may comprise at least one of: camera sensor type, GPS sensor type, host sensor type, lidar sensor type, and/or radar sensor type. The sensor type identifier may comprise a plurality of sensor types specifying the at least one sensor. The sensor type identifier may comprise any type of sensor that may describe the at least one sensor.

The at least one of the streams is a dependent stream, wherein the respective stream configuration data of each dependent stream further comprises a respective reference to at least one other stream. The reference to the at least one other stream may be a reference to an algorithm stream or a reference to an annotation stream. The algorithm stream may be dependent on another stream or sensor measurement data of the sensor. The annotation stream may be a manually created stream by a user. Thus, the annotation stream may be dependent on manual user input. There may be a plurality of dependent streams, wherein the stream configuration data of each dependent stream of the plurality of dependent streams may comprise a respective reference to either an algorithm stream or an annotation stream.

The system further comprises an algorithm entity, wherein the algorithm entity is configured to store, for each of at least one algorithm, respective algorithm configuration data comprising an algorithm identifier, wherein at least one of the dependent streams is an algorithm stream, wherein the stream configuration data of the algorithm stream further comprises a reference to at least one algorithm identifier. The algorithm configuration data that may be stored in the algorithm entity of the system may not comprise an algorithm itself, for example a source of code. Instead, the algorithm configuration data may define or describe the algorithm. The algorithm configuration data may comprise, for example a description of the algorithm or any other kind of specification of the algorithm. Each of the algorithms may be identified by a unique algorithm identifier. The algorithm identifier may also be used to link or connect the algorithm configuration data and therefore the algorithm entity to other entities of the system, for example, the stream entity of the system may be connected or linked to the algorithm entity of the system by a reference to at least one algorithm identifier.

The algorithm entity is stored in the database. The algorithm entity is stored in the same database where the sensor entity, the vehicle entity, the log entity, the sample entity, and the stream entity are stored. The database may be a NoSQL database, preferably a MongoDB database.

According to this embodiment, the algorithm configuration data may use a timestamp for synchronizing with at least one of the sensor configuration data, the vehicle configuration data, the logging configuration data, the sample configuration data, and the stream configuration data. The timestamp for synchronizing the algorithm configuration data with at least one of the sensor configuration data, the vehicle configuration data, the logging configuration data, the sample configuration data, and the stream configuration data may be the same unique timestamp as for synchronizing at least two of the sensor configuration data, the vehicle configuration data, the logging configuration data, the stream configuration data, and the sample configuration data. Therefore, the timestamp for synchronizing the algorithm configuration data may be the Universal Time Coordinated (UTC) timestamp.

According to this embodiment, the algorithm entity may further comprise at least one index, wherein the at least one index may be used to query and/or order the algorithm configuration data. Similar to the at least one index of the sensor entity, the vehicle entity, the log entity, the sample entity, and the stream entity, the at least one index of the algorithm entity may also be a special data structure that may store a value of a specific field, ordered by the value of the field. The specific field may comprise data of the algorithm configuration data.

According to an embodiment, the algorithm configuration data may further comprise at least one of: algorithm name data, algorithm description data, algorithm version data, algorithm repository data, algorithm commit data, and/or algorithm information data. The algorithm configuration data may comprise a plurality of data specifying at least one algorithm that may describe the at least one algorithm. The algorithm configuration data may comprise any kind of data that may describe the at least one algorithm.

According to the invention, the system comprises at least one validator, wherein the at least one validator comprises a pre-hook and/or a post-hook. A pre-hook or a post-hook may be a function that may be executed before or after a certain action in the system or in the database. For example, a pre-hook may be a function that may be used for an action that may be executed each time before data or a document is saved in the system. Pre-hooks in a validation may be used for verifying fields or for setting server internal fields. For example, if a user uploads a document to the system where an object identifier refers to an invalid document, the upload may be rejected with an error message to the user.

If a function should be executed after an action, for example after updating data of the system, a post-hook may be used. Post-hooks may be used for triggering reactions on server side. An example of a post-hook may be a finalization of a sensor stream. After a sensor stream is patched with a finalized flag, i.e. there may be no more data for the sensor stream, a post-hook may afterwards trigger a check on log level that if all sensor streams are finalized, and the log may be marked as finalized.

Pre-hooks and/or post-hooks may be used to validate actions of the system, wherein actions may be any kind of operations in the system, for example saving, updating, and/or deleting data in the system. Thus, pre-hooks and/or post-hooks may help to validate a specific action of the system by executing a function before and after the certain action.

According to this embodiment, the pre-hook may initiate compressing data captured by the at least one sensor before storing the compressed data to the sample entity of the database or in a different storage component and/or the post-hook may initiate deleting any stream of the stream entity comprising a reference to a log of the log entity if the log is deleted. The sensor data or measurement data of the sensor may be stored in binary data. The database may be the database where the system is stored, for example, a MongoDB. The different storage component may be for example a blob storage that may be different to the database used for storing the system or the entities of the system. The pre-hook may initiate, for example, compressing data captured by a camera (for example an image) automatically on server side if a user uploads a camera image to the system. The compressed data size of the image may be added automatically to the data entry of the camera sample or to the different storage component. The post-hook may initiate, for example, deleting all streams with a reference to a log if the log is deleted. In turn, also all streams may a have a post-hook attached that may delete all samples that refer to the respective stream.

According to an embodiment, the at least one sensor may comprise at least one of: a lidar sensor, a radar sensor, a camera sensor, a GPS sensor, or host sensor. The lidar sensor may be able to measure very detailed measurement data, wherein the measurement data of the lidar sensor may include fine and accurate information about objects at a great distance of the lidar sensor. Ambient lightning may not influence the quality of the captured information by the lidar sensor, thus the results at day and night may be without any loss of performance due to disturbances such as shadows, sunlight or headlight glare. Radar sensors are impervious to adverse or bad weather conditions, working reliably in dark, wet or even foggy weather. They are able to identify the distance, direction and relative speed of vehicles or hazards. Measurement data recorded by camera sensors may be used to detect red-green-blue (RGB) information, e.g. identify traffic lights, road signs or red brake lights of other vehicles, and having extremely high resolution. Global position systems (GPS) sensors may receive information signals from GPS satellites and may provide geo location of the GPS sensor anywhere on or near the Earth where there is an unobstructed line of sight to the GPS satellites. The host sensor may be an inertial measurement unit (IMU) sensor. The inertial measurement unit (IMU) may include very precise accelerometers and gyroscopes to estimate the acceleration and yaw rate of a vehicle in three dimensions.

### DRAWINGS

Exemplary embodiments and functions of the present disclosure are described herein in conjunction with the following drawings, showing schematically:
- Fig. 1: an entity relationship diagram illustrating main components and their references of a system for storing data of driver-assistance systems of vehicles according to various embodiments;
- Fig. 2: a class diagram illustrating further specifications of the system for storing data of driver-assistance systems of vehicles according to various embodiments; and
- Fig. 3: a class diagram illustrating an example of the system for storing data of driver-assistance systems of vehicles according to various embodiments.

### DETAILED DESCRIPTION

It may be important that a database is not simply storing everything in a custom format, as this would make sharing data and results for example between teams near impossible. Therefore, a uniform format in the form of schemas or entities may be required. Further requirements to such a database (in other words: a system) and their schemas might come in the form of: uniform schemas to enable sharing data between teams and/or to enable automatic processing of data and/or to enable validation of the data; efficient data storage and schemas to keep storage space and costs low; general data searchability and scene searchability; reconstruction of sensor configurations and vehicle configurations; synchronization of raw sensor data; reconstruction of algorithm behavior and algorithm results; fast queries and fetching of data; and/or integrity and consistency of the data that should be stored in the database or the system.

When working with advanced driver-assistance systems (ADAS) data and machine learning (ML) data that should be used between teams, it may be important to provide a uniform data schema or a uniform structure of a system including entities, as otherwise data sharing and data parsing may become a hassle. Due to long communication lines, parsers required for raw data and field names may be unclear.

To tackle the problem of efficiently storing ADAS data and ML data in a searchable format, one has to keep the ability to query the data and fetching speed in mind, as well as the storage costs needed.

Non-Structured Query Language (Non-SQL or NoSQL) databases, for example MongoDB, may have advantages over standard SQL databases. NoSQL databases may allow for more complex and nested data schemas, horizontal scaling and faster queries when storing large amounts of data. Since data may be optimized for queries, it may come with the drawback that the data usually may not be optimized for data duplication, resulting in duplicate or similar entries. This problem may be solved by using references between data schemas or data entities to avoid duplication of certain meta information. In general, storage costs have become cheaper over time, thus, query ability and speed are a focus for a system described herein.

The storage may be split into two components: a metadata storage part, defined by schemas (or: entities) and saved inside a database, for example MongoDB directly, and a binary storage part that may be referenced by some of the entities (or: schemas) and that may save raw data in a compressed format inside a storage component, for example a blob storage that is different to the database used for storing the entities. The storage component for binary data may be usually cheaper than for example the on-disk MongoDB storage. The binary storage part may be used for large-style sensor data that usually comes in binary representation like lidar pointclouds, radar datacubes or camera images. The blob storage itself may still be on a disk (e.g. gridfs) or in a cloud (e.g. Azure blob storage).

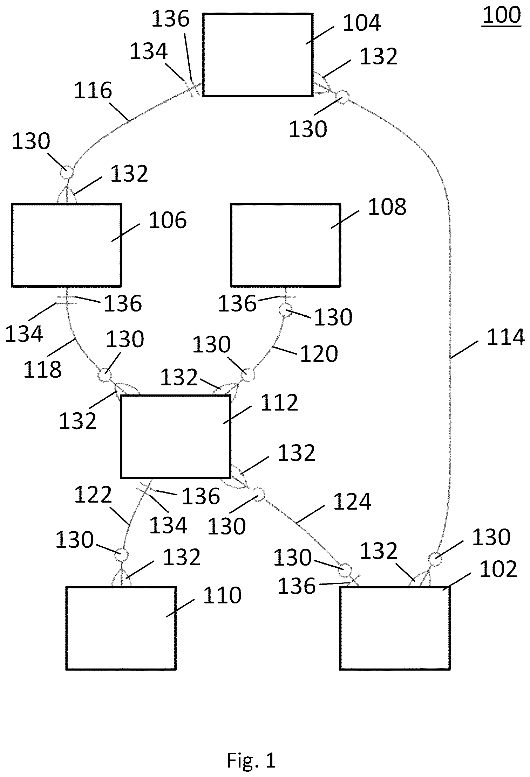

Fig. 1 shows an entity relationship (ER) diagram of a system for storing data of driver-assistance systems of vehicles according to various embodiments. The ER diagram illustrates main components and their references of the system. The entity relationship diagram is a graphical representation that may specify relationships between entities. The entities are represented as rectangular boxes, whereas the relationships between the entities are represented as lines between the rectangular boxes or entities. Different shapes at the ends of the lines represent a relative cardinality of the relationship. The relationships between the entities have two indicators that are shown on both sides of the line. A first indicator (also may be called as a multiplicity) refers to a maximum number of times that an instance or an entry of one entity can be associated with entries in a related entity. The maximum number of times can be one or many. A second indicator describes a minimum number of times one entry can be related to others.

The minimum number can be zero or one, and accordingly may describe the relationship as optional or mandatory. A combination of these two indicators, the first indicator and the second indicator, is always in a specific order. Placed on the outside edge of the relationship, the symbol of multiplicity (i.e. the first indicator) comes first. The symbol indicating whether the relationship is mandatory or optional (the second indicator) is shown after the symbol of multiplicity (the first indicator). Thus, for example, an optional relationship 130 between two entities is represented by an empty circle, a mandatory relationship 134 between two entities is represented by a straight line perpendicular to the relationship line, a multiplicity of many 132 is represented by a three-pronged 'crow-foot' symbol, and a multiplicity of one 136 is represented by a straight line perpendicular to the relationship line.

The main components or entities of the system 100 include a sensor entity 102, a vehicle entity 104, a log entity 106, an algorithm entity 108, a sample entity 110 and a stream entity 112. The relationships between the entities, i.e. the sensor entity 102, the vehicle entity 104, the log entity 106, the algorithm entity 108, the sample entity 110 and the stream entity 112 may be represented by lines between the entities and may be described as follows. The relationship 114 between the sensor entity 102 and the vehicle entity 104 may be described in that zero or many entries of the sensor entity 102 are related to zero or many entries of the vehicle entity 104 and, vice versa, zero or many entries of the vehicle entity 104 are related to zero or many entries of the sensor entity 102. The relationship 116 between the vehicle entity 104 and the log entity 106 may be described in that zero or many entries of the log entity 106 are related to one and only one entry of the vehicle entity 104 and, vice versa, one and only one entry of the vehicle entity 104 is related to zero or many entries of the log entity 106. The relationship 118 between the log entity 106 and the stream entity 112 may be described in that zero or many entries of the stream entity 112 are related to one and only one entry of the log entity 106 and, vice versa, one and only one entry of the log entity 106 is related to zero or many entries of the stream entity 112. The relationship 120 between the algorithm entity 108 and the stream entity 112 may be described in that zero or many entries of the stream entity 112 are related to zero or one entry of the algorithm entity 108 and, vice versa, zero or one entry of the algorithm entity 108 are related to zero or many entries of the stream entity 112. The relationship 122 between the stream entity 112 and the sample entity 110 may be described in that zero or many entries of the sample entity 110 are related to one and only one entry of the stream entity 112 and, vice versa, one and only one entry of the stream entity 112 is related to zero or many entries of the sample entity 110. The relationship 124 between the stream entity 112 and the sensor entity 102 may be described in that zero or one entry of the sensor entity 102 is related to zero or many entries of the stream entity 112 and, vice versa, zero or many entries of the stream entity 112 are related to zero or one entry of the sensor entity 102.

A first step to store ADAS data inside the system 100 may be the description of where the data is actually coming from. This part is handled by the sensor entity 102 and the vehicle entity 104.

The sensor entity 102 is configured to store, for each of at least one sensor mounted on a vehicle, respective sensor configuration data. The sensor configuration data (in other words: an entry of the sensor entity 102, or a sensor entry) inside the system 100 (or inside the database) may be considered as a "physical sensor in a certain point in time". The sensor entry should store an intrinsic configuration of the sensor including everything that would be needed to reconstruct a scene. A scene may be, for example, a recording drive of a vehicle, collecting data used for ADAS. An actual calibration of the at least one sensor may slightly change for each type of the sensor. Data that may be stored in the sensor entity 102 of the system 100 may not include raw sensor data, for example measurement data of the sensor.

The sensor configuration data may include at least one of: sensor identifier, sensor type identifier, sensor name data, sensor number data, sensor hardware data, sensor software data, sensor time data, sensor sample-type data, sensor status data, and/or sensor calibration data. The sensor identifier may be a unique numeric number or a unique description for each of the at least one sensor to identify the at least one sensor. The sensor type identifier may be a string and may describe a type of the sensor. Possible types of a sensor may be described further below. Using the sensor type identifier may facilitate to query for sensors and sensor data for a certain sensor type. The sensor name data may be a freely selectable string of a name of the sensor. The sensor number data may be a string and may describe a serial number of the sensor. The sensor number data may be used for a unique identification of the sensor. Each sensor may get a serial number upon production which may not overlap with the serial number of any other sensor. The sensor hardware data may be a string and may describe a hardware version of the sensor. The sensor software data may be a string and may describe a software version of the sensor. Both, the sensor hardware data and the sensor software data may affect how to parse the sensor data or how an original raw data of the sensor was stored. The sensor data may usually be sent in a raw, not interpreted binary format, for example, a list of binary values. Without knowing how to interpret the data, getting relevant information from the sensor data may not be possible. Additionally, a representation of the sensor data may change from one hardware version or software version to another, therefore the raw binary data of the sensors may also need to be interpreted differently. Thus, if the hardware version and/or the software version that may be used on the sensor is known, interpreting the sensor data may become possible.

The data structures and warehouse described herein may provide a common interface for users, such that an end-user may not have to worry about how the raw data of the sensors may look like. Therefore, it may not matter if a sample was constructed by reading different raw sensor data of sensors with different hardware versions and/or different software versions, for example, from different sensors mounted on vehicles from different automobile manufacturers. A common format may be shared that may be used between different development teams. However, in case the raw recorded sensor data may be needed, it may be essential to know what hardware version of the sensor and/or software version of the sensor has been used. Furthermore, the hardware version and/or the software version of the sensor may define how to interpret certain fields. For example, sensor related data structures may need to be parsed from raw data bytes of the raw recorded sensor data. A GPS sensor may record data in 64 bytes format, but depending on the hardware version of the GPS sensor and/or the software version of the GPS sensor the recorded data may be parsed into latitude data of 32 bytes and longitude data of 32 bytes for hardware version 1.0 of the GPS sensor and/or the software version 1.0 of the GPS sensor. Additionally or alternatively, the recorded data of a GPS sensor with hardware version 2.0 and/or software version 2.0 may be parsed into latitude data of 16 bytes, longitude data of 16 bytes and altitude data of 32 bytes. Therefore, to be able to parse the raw recorded sensor data into a generic GPS sample data structure, depending on the hardware version and/or the software version during upload/parsing of the raw recorded sensor data, the raw binary bytes may be needed to be interpreted differently.

The sensor time data may include an UTC (Universal Time Coordinated) timestamp of a setup of the sensor. For example, the sensor may be flashed at some other point of time to update a software version of the sensor or an intrinsic calibration of the sensor was updated. This would result in the same sensor number data, for example the sensor serial number, for identifying the sensor as it is still the same "physical" sensor. However, there may be changes between those two documents inside the database in terms of configuration of the sensor. The sensor sample-type data may be an array that may include a list of sensor sample types that can be produced by the sensor. For example, a radar sensor may produce a radar sample type and a Compressed Data Cube (CDC) sample type at the same time. The sensor status data may be a string and may describe a status of the intrinsic calibration of the sensor. For example, the sensor status data may be the string "uncalibrated" for a sensor that is setup on a vehicle but not yet calibrated, the sensor status data may be the string "calibrated" for a sensor that is calibrated already, or the sensor status data may be the string "unknown" if nothing is known about the intrinsic calibration of the sensor. More values may be possible for the sensor status data of the sensor. The sensor calibration data may describe a calibration of the sensor, wherein the calibration may depend on the used sensor. A different calibration may be required depending on the type of the sensor. For example, the sensor calibration data of a camera sensor may be a camera calibration matrix K (3x3) and a distortion matrix D (N x 1).

Since a sensor is considered as a very basic entry inside the system 100, starting the description of where the data comes from, no references to other data or entries of other entities may be needed.

Similar to the sensor entries, vehicle entries or vehicle configuration data inside the system 100 may be considered as a "physical vehicle setup in a certain point in time". The most prominent feature of the vehicle configuration data may be to store all equipped sensors and their extrinsic calibration as well as possible connective information (for example Controller Area Network (CAN) bus information or ethernet information).

The vehicle entity 104 is configured to store, for each of at least one vehicle, respective vehicle configuration data. The vehicle configuration data comprises a respective vehicle identifier and a reference to at least one sensor identifier.

The vehicle configuration data may include at least one of: vehicle name data, vehicle identification data vehicle time data, vehicle sensor data, vehicle sensor calibration data, vehicle sensor calibration status data, vehicle sensor connection data, vehicle dimension data, vehicle coordinate system data. The vehicle identifier may be a unique numeric number or a unique description for each of the at least one vehicle to identify the at least one vehicle. The vehicle name data may be a freely selectable string of a name of the vehicle. The vehicle identification data may be a string and may describe a vehicle identification number (VIN) of the vehicle. The VIN or the vehicle identification data may be used for a unique identification of the vehicle, even in real world. The vehicle time data may include an UTC timestamp of when the vehicle was setup. For example, a sensor might have been replaced or added to the vehicle. This may result in the same vehicle identification data (VIN) and vehicle name data for identifying the vehicle, as it is still the same "physical" object. However, there may be changes between those two documents inside the system 100 in terms of sensor configuration. The vehicle sensor data may be an array that may include a list of sensors attached to the vehicle. The vehicle sensor calibration data may describe extrinsic calibration information of the sensor containing a position (in x-, y-, z-coordinates) and a rotation (in quaternions, x-, y-, z-, w-coordinates) of the sensor. The vehicle sensor calibration status data may be a string and describe a status of an extrinsic calibration of the sensor. For example, the vehicle sensor calibration status data may be the string "uncalibrated" for a sensor that is setup on the vehicle but only reference values were taken from the CAD drawing. More values are possible for the vehicle sensor calibration status data. The vehicle sensor connection data may contain possible IP (Internet Protocol) settings for ethernet connections of the sensor or may contain channel settings used for a CAN (Controller Area Network) bus connection. The vehicle dimension data may be optional data and may describe vehicle dimensions of the vehicle, for example a length of the vehicle, a width of the vehicle, an overhang of the vehicle and/or a height of the vehicle. The vehicle coordinate system data may describe a coordinate system of the vehicle. If there is no vehicle coordinate system (vcs) given, the system 100 may assume a default vehicle coordinate system (for example by defining x-coordinate as a lateral direction, y-coordinate as a longitudinal direction). The reference to the at least one sensor identifier may describe a reference inside the system 100 to a unique sensor identifier of at least one sensor. Since the vehicle entity 104 may describe a used sensor setup in the vehicle, the vehicle entity 104 may reference to the sensor entity 102 using a reference to at least one sensor identifier.

There may be no special vehicle types described in the vehicle entity 104 in terms of how to store data. A definition of the vehicle entity 104 may be abstract enough for all vehicle types and no specialization of vehicles may be needed.

The log entity 106 may be described as a container of a single recording drive done with a specified vehicle. A duration of the single recording drive may be freely selectable and may be mostly defined by its data. The logging configuration data (in other words: log document) itself may not save any atomic data or raw data of the recording drive, for example measurement data, but may define properties of the recording drive.

The log entity 106 is configured to store, for each of at least one log, respective logging configuration data. The logging configuration data comprises a respective log identifier and a reference to at least one vehicle identifier.

The logging configuration data may include at least one of: logging origin data, logging start time data, logging end time data, logging status data. The log identifier may be a unique numeric number or a unique description for each of the at least one log to identify the at least one log. The logging origin data may be a string and may describe a path to raw data the at least one log data was uploaded from. The path may be a URL, (a link or reference or path to a) NAS (Network-attached storage system) or a local path. The logging origin data may be useful if the raw data is still needed later on, for example for parsing. The logging start time data may describe a time of starting a recording drive. The logging start time data may be unique for each of the at least one log of the same vehicle, as the same physical vehicle may not be able to record multiple logs at the same time. The logging end time data may describe a time of ending a recording drive. The logging end time data of a recording may describe a timepoint later than a timepoint of the logging start time data of the recording. Using the logging end time data of the recording and the logging start time data of the recording may also automatically allow to calculate a duration of the log. The logging status data may be a Boolean parameter, wherein the logging status data may be "true" if, for example, all sensor data (measurement data of the sensor) has been uploaded to the system 100. When the logging status data (or a flag) is set to "true" it may be enforced that no new sensor data may be added to the log. This may signify the user, that the sensor data is safe to use for data processing, as no changes to the original sensor data may be possible. The reference to the at least one vehicle identifier may describe a reference inside the system 100 to a unique vehicle identifier of at least one vehicle. The log entity 106 may be linked to the vehicle entity 104 using the reference to at least one vehicle identifier and therefore, the log entity 106 may also indirectly be linked to a sensor setup of the sensor entity 102.

By defining a complete sensor configuration and a complete vehicle configuration, it may be possible to resimulate a log recording as close as possible to the real experience when it was recorded.

While logs or logging configuration data may be described as an abstract container for a complete recording drive, streams or stream configuration data of the stream entity 112 may describe more detailed containers for a certain data type. The stream configuration data may be chronologically sorted and stored in terms of sample entries. However, the stream entity 112 may not contain raw measurement data like actual sensor measurement data entries or algorithmic data entries, but instead may describe what kind of data is stored and for what sensor or algorithm. Splitting up raw recording data into streams may allow a user to also modify only a part of the raw data. That means deleting, patching or refactoring certain recording data may become possible for only a part of the recording data, even if it is saved in a same recording file. For example, if an ethernet file (for example a ".pcap file") may include a plurality of recording data, for example, data from radar sensors as well as data from lidar sensors, then splitting the recording data up into streams may allow for modification, deletion or similar tasks of only one of the recording data, the data from radar sensors or the data from lidar sensors. A possible problem of splitting up the data into different containers (streams) may be the consistency of the recording data. This problem may be overcome using validators and/or hooks as will be described further below.

The stream entity 112 is configured to store, for each of at least one stream, respective stream configuration data. The stream configuration data comprises a respective stream identifier and a reference to at least one log identifier.

The stream configuration data may include at least one of: stream sample data, stream status data, stream duration data, stream start time data, stream end time data. The stream identifier may be a unique numeric number or a unique description for each of the at least one stream to identify the at least one stream. The stream sample data may describe a type of samples this stream may contain. For example, a GPS sensor may produce samples of type "GPS". The stream status data may be a Boolean parameter, wherein if the stream status data is set to "true", the stream may be considered to be final and no new stream data may be added to the stream. This may signify a user that the stream data is complete and may safely be used since it will not be changed in the future. The stream start time data and the stream end time data may describe an optional stream configuration data. The stream start time data and the stream end time data may each be described by a date. If the stream start time data and the stream end time data are set, the stream may only be valid in a timeframe defined by the stream start time data and the stream end time data. A duration of the stream may be calculated based on the stream start time data and the stream end time data. A stream may contain only samples with timestamps inside the duration of the stream. The reference to the at least one log identifier may describe a reference inside the system 100 to a unique log identifier of at least one log. The stream entity 112 may be linked to the log entity 106 by the reference to the at least one log identifier.

Samples may contain actual sensor data entries (for example measurement data of a sensor) or algorithmic data entries linked to the data type of the stream they belong to. The sensor data entries or the algorithmic data entries may be chronologically sorted and indexed by a common timestamp. Since there may be many different types of data entries, the main sample type itself may not have many fields (in other words: sample configuration data), but instead a wide plethora of types providing the necessary description for their use-case.

The sample entity 110 is configured to store, for each of at least one sample, respective sample configuration data. The sample configuration data includes a sample identifier, and a reference to at least one stream identifier. The sample configuration data may include sample time data. The sample identifier may be a unique numeric number or a unique description for each of the at least one sample to identify the at least one sample. The sample time data may be a global UTC timestamp of the sample, used for example for indexing, wherein the indexing may usually be done in order of the sensor's raw data frames. The reference to at least one stream identifier may describe a reference inside the system 100 to a unique stream identifier of at least one stream. The sample entity 110 may be linked to the stream entity 112 by the reference to the at least one stream identifier. If the stream is a sensor stream, the reference to the at least one stream identifier may have to align with one of the stream sample data of the stream entity 112 and in turn with one of the sensor sample-type data of the sensor entity 102.

The algorithm entity 108 is configured to store, for each of at least one algorithm, respective algorithm configuration data. The algorithm configuration data of the algorithm entity 108 may describe how data of an algorithm stream has been produced. The algorithm configuration data may also support versioning, allowing developers to compare different algorithm results and keeping track of parameters used.

The algorithm configuration data comprises an algorithm identifier. The algorithm configuration data may include at least one of:
algorithm name data, algorithm description data, algorithm version data, algorithm repository data, algorithm commit data, and/or algorithm information data. The algorithm identifier may be a unique numeric number or a unique description for each of the at least one algorithm. The algorithm name data may be a freely selectable string of a name of the at least one algorithm. The algorithm description data may be a string that may indicate a concise description of the algorithm, such that other users might understand the purpose of the algorithm. The algorithm version data may be a semantic versioning string. There may be only one algorithm with the exact same name (i.e. the algorithm name data) and version (i.e. the algorithm version data) present in the system 100. The algorithm repository data may be a string and describe a repository where the algorithm name data is stored. The algorithm repository data may be a Uniform Resource Locator (URL) or a web-address for some sort of distributed version control system like for example "git". The algorithm repository data may track all changes made to the algorithm, i.e. building a history of the algorithm over time. Optionally, the additional algorithm commit data that may describe a commit hash of the repository may also be provided to further restrict the code base to a single commit. The algorithm information data may contain all necessary information to make a result of the algorithm reproducible. The algorithm information data may contain hyper parameter definitions and/or other calibrations and/or parameters needed. The hyper parameter definitions and/or the other calibrations and/or the parameters may be used in order to be able to reproduce algorithmic results of an algorithm. For example, if an algorithm may use a "threshold" to filter out objects that may lie under a certain probability, then this information may be added to the algorithm configuration data.

No references to other entities of the system 100 may be needed for algorithms, but references may be possible, for example, if additional other schemas or entities may be added to the system 100.

All database entries of the system 100 showing in Fig. 1, i.e. the sensor entity 102, the vehicle entity 104, the log entity 106, the algorithm entity 108, the sample entity 110 and the stream entity 112 may have a unique object identifier field ("_id") that may be added by the MongoDB database and may be used to reference a unique object inside the database. Reference in this context may mean that a document is referring to another document inside the database, for example by providing the unique object identifier (ObjectID) in one of its fields.

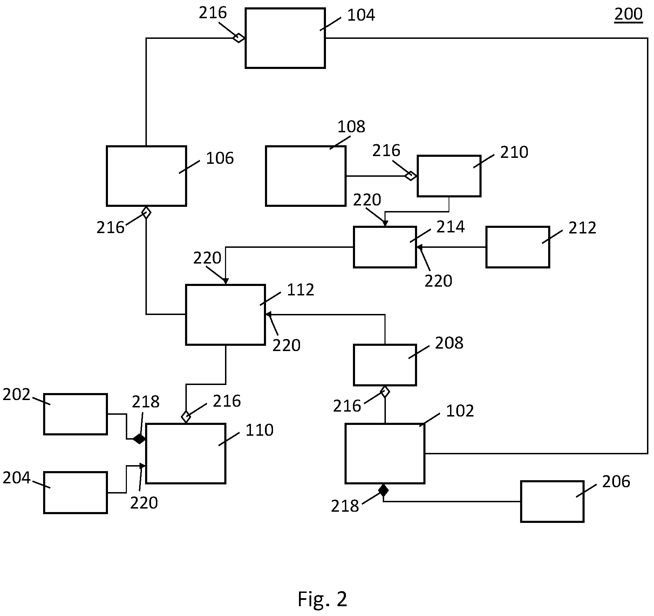

Fig. 2 shows a class diagram illustrating further specifications of the system 100 for storing data of driver-assistance systems of vehicles according to various embodiments. The system 100 may be represented using a unified modeling language (UML) diagram as shown in Fig. 2. The UML diagram may show how objects or entities of the system 100 may affect each other using connections of different types. Thus, arrows that may connect objects or entities of the system 100 may show important relationships. A connection between two objects represented by a solid line with an unfilled diamond at one end may define an aggregation 216 between the connected objects. This connection, i.e. an aggregation, may mean that the object connected to the solid line may exist independently of the other object connected with the unfilled diamond. A connection between two objects represented by a solid line with a filled diamond at one end may define a composition 218 between the connected objects. This connection may mean a similar association to the aggregation 216 but with a key difference. The object connected to the solid line may only exist as long as the other object connected with the filled diamond exists. A connection between two objects represented by a solid line with a filled arrow at one end may define an inheritance 220 or a generalization between the connected objects. The object connected to the solid line may inherit attributes of the object connected to the filled arrow.

A specification of the samples stored in the sample entity 110 may describe a type of the sample. Since samples may contain actual data entries, samples may come in many different types that may be defined in a specification block sample type 202. The sample types 202 may specify the usage of the sample. Therefore, the sample types 202 may vary in the fields they offer depending on their use-case. One sample type 202 of samples may be a binary sample and many other types may be inherited from this type.

The samples may reference to their respective stream they belong to, for example to a stream identifier. Additionally, the sample type 202 may match the one of the stream sample data of the stream entity 112. Since samples may be considered as atomic data entries produced by either sensors, annotations or algorithms, stored inside the database or in a storage component different to the database, a sample may also reference to other documents (for example other identifiers) inside the database.

Binary samples may only save some meta information in the system 100, i.e. on database level (for example on the MongoDB level). Most of the data of binary samples may be stored in a storage component different to the database, preferably in a cloud storage or a separate blob storage. Binary samples may allow for a blob to be stored anywhere that is reachable via a URL (for example in the cloud storage or on disk). Usually, binary samples may be large in size. The biggest part of the binary data may be stored therefore in the storage component (for example a binary storage component) different to (in other words: different from) the database instead of storing it in the database (for example the MongoDB) directly. Thus, upon querying, only metadata may be returned for quickly finding specific data. If the actual binary data, for example camera images or the like, are needed, a user may further request also the binary payload for those samples.

If the sample is a binary sample 204, the sample configuration data may further include at least one of: binary name data, binary address data, binary type data, binary check data, binary size data, binary status data, binary compress data, binary compress check data, and/or binary compress size data. The binary name data may be a filename of the storage component or a filename of a data blob. The binary name data may be for example the name of an image file of a camera image captured using a camera sensor. The binary address data may be a URL to the binary content of this sample. The binary address data may be a link to a file on a disk, or the link to a blob storage in the cloud. The binary type data may be a type of content. The binary type data may usually fit to one of the possible MIME-types, for example an "image" for images or an "octet-stream" for generic binary data. Multipurpose Internet Mail Extensions (MIME) types may be media types that may indicate a nature and a format of a document, a file, or an assortment of bytes. An octet-stream may be used for data with unknown data type. The binary check data may be a checksum of the content. The binary check data may be used also for verification upon upload to ensure that all data has been received. The binary size data may be a size of the content. The binary size data may allow for seeing the size of the binary payload without having to request it. The binary status data may be a Boolean character. The binary status data may be "true" if binary content was already upload and saved in the storage access. The binary status data may be "false" if only the metadata is present. Usually uploading of the binary content may include two steps. In a first step, meta information of the binary content may be uploaded. In a second step, the binary content itself may be uploaded and validated against the provided meta information. The binary compress data may be a type of encoding used for compressing the binary data. Additional, compressing the binary data may be optional, since not all binary data may need to be compressed on server side, as some datatypes may be already compressed by nature (for example "gzip"). The binary compress check data may be a checksum of the compressed content. The binary compress check data may only be used if further compression is actually taking place. The binary compress size data may be an optional number that may describe a size of the compressed content. The binary compress size data may only be used if further compression is actually taking place.

Besides the binary sample type, a plurality of other sample types 202 may be possible. The following description may focus on some exemplary more prominent sample types 202 with some of their fields. Thus, not all sample types 202 and not all fields of all possible sample types 202 of samples are described.

The sample type 202 of a sample stored in the sample entity 110 may be defined by a sample type identifier of the sample configuration data. The sample type identifier may include at least one of the following sample types 202: Binary JavaScript Object Notation (BSON) sample type, CDC sample type, camera sample type, N-dimensional (ND) array sample type, pointcloud (PCD) sample type, semantic segmentation sample type, video sample type, Boolean sample type, statistic sample type, key point information (KPI) sample type, annotation sample type, custom sample type, egomotion sample type, file info sample type, GPS sample type, host sample type, inertial measurement unit (IMU) sample type, map sample type, radar sample type, and/or.

An example of a binary sample type may be the BSON sample type and an example of a none binary sample may be the custom sample type. Samples of the BSON sample type or the custom sample type may be allowed for any fields and datatypes. Samples of the BSON sample type may require a binary payload and may allow for storing part of the data in the separate binary storage, whereas samples of the custom sample type may store its data only in the metadata storage. When data is stored in custom format or BSON format, a server may not be able to provide automatic processing capabilities (e.g. using microservices), since no uniform format may be enforced. Binary samples may include the following sample types. The BSON sample type may be a customizable sample type, wherein samples of the BSON sample type may store data in a standardized binary format. A server may not implement any features on freely customizable data entries. The CDC sample type or compressed data cube sample type may be used for radar data, for example beam vector data of radar sensors. Since the radar data may be large, most of the radar data may be saved inside the binary storage. Samples of the camera sample type may save camera images of a camera sensor. The meta information may be extended with width, height and depth information, while the camera image itself may be saved in the binary storage. A further sample type may be an N-Dimensional (ND) array sample type that may describe standardized data storage for arrays. The pointcloud sample type may be a type for pointcloud information that may be a typical output type for a lidar sensor. Samples of the pointcloud sample type may save most of its data into the binary storage but may provide parsing information in the metadata part, for example, a location of a point and its intensity. The semantic segmentation sample type may describe a specialized PCD format for storing semantic segmentation points. Similar to the format of the pointcloud sample type, the semantic segmentation sample type may save a location of a point and additionally a class. The video sample type may be similar to the camera sample type. Instead of saving singular images for multiple timestamps, samples of the video sample type may save a complete video and may provide a start time, a frequency and a duration of the video.

Besides binary sample types, there may be, for example, a Boolean sample type. Samples of the Boolean sample type may store information, for example, whether a camera image shows a certain category (e.g. a pedestrian). Statistic sample types may be abstract sample types, wherein samples of the statistic sample type may store statistic information. There may be bounded statistic sample types for bounded statistic information and/or numbered statistic sample types for storing numerical value statistics. Samples of the KPI sample type may store key point information for evaluation. KPI sample types may include bounding box KPI samples types, cuboid KPI sample types and/or matching KPI sample types. Samples of the bounding box KPI sample type may save key point information for bounding boxes. Samples of the cuboid KPI sample type may save key point information for cuboids. Samples of the matching KPI sample type may save key point information for annotations, for example, if (or whether) an annotation A matches to an annotation B.

Samples of the annotation sample type may be abstract samples that may contain annotation information. Annotation sample types may include bounding box sample types, cuboid sample types key point list sample types and/or lane sample types. Samples of the bounding box sample type may save predictions or annotations in a 2D bounding box format. This may be used for images. The position and prediction information, for example class or confidence, of all objects in a scene may be saved for a given timestamp. Similar to samples of the bounding box sample type, samples of the cuboid sample type may save prediction information in a 3D context. Additionally to the position and prediction information, a rotation and a velocity may be added. Samples of the key point list sample type may save key points in an image, for example a left shoulder or a right shoulder of a person. Similar to cuboid sample types, the lane sample type may provide prediction information for lanes in a lane list. The prediction information for lanes may include lane marking positions, as well as possible lane information like ego lane, right lane or left lane.

Samples of the egomotion sample type may save host data with view on the egomotion of a vehicle, for example an orientation, a translation, a velocity and an acceleration information of the vehicle. Samples of the file info sample type may store information about files that may have been used for example for creating a log. Samples of the GPS sample type may save a GPS location of the vehicle, for example a latitude position, a longitude position and an altitude position, as well as a heading and a possible GPS timestamp. Samples of the host sample type may save host information data of the vehicle, for example speed values and yaw values of the vehicle. The host sample type may also provide information about pitch status values, roll status values and system status values like a turn indicator position, turning signal signs, a pedal position or the steering wheel angle of the vehicle. The inertial measurement unit (IMU) sample type may be similar to the host sample type or GPS sample type, wherein samples of the IMU sample type may store inertial measurements of the vehicle. Samples of the map sample type may store two-dimensional ground map projections or grids that may allow, for example, visualizing two dimensional images on a ground plane in a three-dimensional world.

The radar sample type may be a second type of output of a radar sensor. The radar sample type may already be parsed radar point locations. In addition to range, azimuth, elevation and range rate values, also higher-level information like look type and scan index of the current radar frame may be stored.

There may be different sensor types for the at least one sensor configured in the sensor configuration data of the sensor entity 102. In theory, there may be as many sensor types 206 as there are sensor variations. The most important feature of a sensor's type 206, however, may be its respective calibration type. During vehicle recordings for capturing sensor data the following sensor types 206 may be used. A camera sensor may be used, wherein the camera sensor may describe any sort of camera like an RGB camera, a greyscale camera or an infrared camera. The sensor entry of the sensor configuration data may provide additional information in terms of width and height of the produced camera image, as well as the calibration matrices used (for example K matrices or D matrices). A GPS sensor may be used for describing the latitudinal and longitudinal position of the recording vehicle on earth. A host sensor may be an inbuild vehicle host sensor or an inertial measurement unit (IMU). The host sensor may produce host data like speed and yaw of the vehicle, but also may provide information about several signals like turn signals, steering wheel or pedal positions of the vehicle. A lidar sensor may produce pointclouds and azimuth and elevation calibrations for each laser. For example, a pandora lidar or a velodyne lidar may be further subtypes of a lidar sensor. A lidar sensor may have high precision but also may come with a high price tag. Radar sensors may be cheaper than lidar sensors and may come with USC and SMC calibration definitions, which may contain various calibration parameters. In general, there may be many subtypes of radar sensors like SRRs (short range radars), MRRs (medium range radars) or imaging radars.

Also, for streams stored in the stream entity 112 there may be different stream types. In general, a stream type me be a sensor stream 208 or a dependent stream 214, wherein the dependent stream 214 may include an algorithm stream 210 or an annotation stream 212.

All streams may point to the recording they belong to, such that they may be traced back to its original producer. A sensor stream 208 may denote that the contained samples of the sensor stream 208 may have been produced by a sensor during a recording session. Thus, if the stream is a sensor stream 208, the stream entity 112 may also be linked to a sensor to which this streams belongs. The stream configuration data of the sensor stream 208 may include a reference to at least one sensor identifier pointing to one of the sensors inside the vehicle. Therefore, the stream entity 112 is linked to the sensor entity 102 by the reference to at least one sensor identifier. Furthermore, if the stream is a sensor stream 208, then the stream sample data of the stream entity 112 may need to match one of the allowed data types listed in the sensor sample-type data of the sensor entity 102.

Dependent streams 214 may depend on data of the sensor stream 208 and may produce a sort of prediction data, for example bounding boxes, cuboids or other sort of predictions. If the stream is a dependent stream 214, the stream configuration data of the dependent stream 214 includes a reference to at least one other stream. The at least one other stream may be an algorithm stream 210 or an annotation stream 212.

An annotation stream 212 may be used for manually created annotations, for example ground truth annotations. Sample configuration data of annotation streams 212 may include annotation-typed data, for example bounding boxes, cuboids or other sort of predictions. Ground truth annotations may be used to train machine learning (ML) networks or may be used for testing algorithms, at least partially.

Algorithm streams 210 may be also a kind of prediction similar to annotation streams 212. However, algorithm streams 210 may not be produced by a manual effort but by some sort of machine learning (ML) algorithm instead. Since versioning may be possible for the used algorithms, it may be possible to have multiple algorithm streams 210 for the same algorithm attached to a same log. This may allow to compare outputs of different versions of the same algorithm with each other. If the dependent stream 214 is an algorithm stream 210, the algorithm stream 210 of the stream entity 112 may also be linked to an algorithm it belongs to. The stream configuration data of the algorithm stream 210 includes a reference to at least one algorithm identifier pointing to the algorithm it belongs to. Therefore, the stream entity 112 may also be linked to the algorithm entity 108 by the reference to at least one algorithm identifier. The stream configuration data of an algorithm stream 210 may also, at least implicitly, include references to other streams. For example, a camera bounding box algorithm stream may point to its original camera sensor stream.

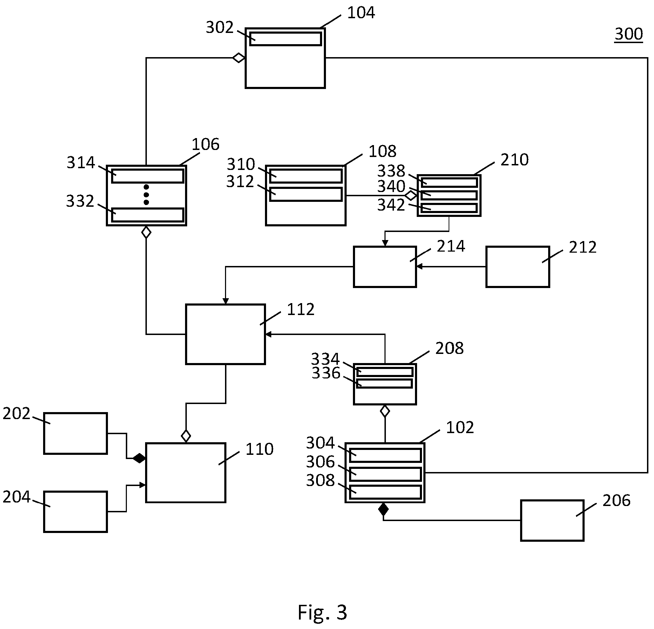

Fig. 3 shows a class diagram 300 illustrating an example of the system 100 for storing data of driver-assistance systems of vehicles according to various embodiments. In this example, numeric numbers are used for the identifiers, for example, "id 1", "id 2", etc., to keep the examples understandable and simple. A correct example of a usual form of an identifier may be:
507f1 f77bcf86cd799439011.

The system 100 of this example may include a vehicle entity 104. Vehicle configuration data 302 is stored in the vehicle entity 104. The vehicle configuration data 302 may include a vehicle identifier "id 1" and a vehicle name data "test vehicle".

The system 100 may further include a sensor entity 102. Sensor configuration data 304, 306, 308 may include data of three different sensors. A first sensor may be a camera sensor, a second sensor may be a radar sensor and a third sensor may be another camera sensor. The sensor configuration data 304 of the first sensor, i.e. the camera sensor, may include a first sensor identifier "id 2" and a first sensor name data "test camera sensor". The sensor configuration data 306 of the second sensor, i.e. the radar sensor, may include a second sensor identifier "id 3" and a second sensor name data "test radar sensor". The sensor configuration data 308 of the third sensor, i.e. the other camera sensor, may include a third sensor identifier "id 4" and a third sensor name data "test camera sensor 2". The first sensor and the second sensor may be mounted on the vehicle, wherein the third sensor may not be mounted or attached to the vehicle. Thus, only the first sensor and the second sensor may be attached to said vehicle and listed in the vehicle configuration data 302. Therefore, the vehicle configuration data 302 may include a reference to the first sensor identifier "id 2" and a reference to the second sensor identifier "id 3".

The system 100 may further include a log entity 106 including ten logs. Logging configuration data 314, ..., 332 of the ten logs may include log identifiers "id 10" to "id 19", one for each of the ten logs. The logging configuration data 314 of a first log, for example, may include a first log identifier "id 10". The logging configuration data 316 of a second log, for example, may include a second log identifier "id 11", and so on till the logging configuration data 332 of a tenth log may include a tenth log identifier "id 19". The logging configuration data 314, ..., 332 may further include a reference to the vehicle identifier "id 1" of the vehicle configuration data 302.

The system 100 may further include a stream entity 112 including two sensor streams 208. The first of the two sensor streams 208 may be a set of ten camera sensor streams corresponding to the ten logs respectively. The stream configuration data 334 of each of the camera sensor streams may include a reference to the first sensor identifier "id 2" of the sensor configuration data 304 of the first sensor. Further, the stream configuration data 334 of each of the camera sensor streams may include a stream identifier "id 20" to "id 29" for each of the camera sensor streams respectively. The second of the two sensor streams 208 may be a set of ten radar sensor streams corresponding to the ten logs respectively. The stream configuration data 336 of each of the radar sensor streams may include a reference to the second sensor identifier "id 3" of the sensor configuration data 306 of the second sensor. Further, the stream configuration data 336 of each of the radar sensor streams may include a stream identifier "id 30" to "id 39" for each of the radar sensor streams respectively.

The system 100 may further include an algorithm entity 108. Algorithm configuration data 310, 312 may include data of two different algorithms. The algorithm configuration data 310 of the first algorithm may include a first algorithm identifier "id 5", a first algorithm version data "version 1.0" and an algorithm name data "test algorithm". The algorithm configuration data 312 of the second algorithm may include a second algorithm identifier "id 6", a second algorithm version data "version 2.0" and the same algorithm name data "test algorithm" as the first algorithm.

The stream entity 112 of the system 100 may further include three algorithm streams 210. The stream configuration data 338 of the first algorithm stream 210 may include a stream identifier "id 7", a reference to the first algorithm identifier "id 5" of the algorithm configuration data 310, a reference to the first log identifier "id 10" of the logging configuration data 314 and a reference to the second log identifier "id 11" of the logging configuration data 316. The stream configuration data 340 of the second algorithm stream 210 may include a stream identifier "id 8", a reference to the first algorithm identifier "id 5" of the algorithm configuration data 310, a reference to the first log identifier "id 10" of the logging configuration data 314 and a reference to the second log identifier "id 11" of the logging configuration data 316. The stream configuration data 342 of the third algorithm stream 210 may include a stream identifier "id 9", a reference to the second algorithm identifier "id 6" of the algorithm configuration data 312 and a reference to the first log identifier "id 10" of the logging configuration data 314.

The system 100 further includes a sample entity 110 including sample configuration data with sample identifiers. For simplicity of this example, the sample identifiers are omitted, but in an actual embodiment, there may be some for each stream.

The following table shows some example queries and results using the above assumptions. All queries may go to their respective endpoints, meaning when querying for sensors only sensors will be returned and queried for. The same may apply for all other types.

| **Description** | **Endpoint** | **Query** | **Resulting (IDs)** |
|---|---|---|---|
| Get vehicle by id | vehicles | {"_id": 1} | 1 |
| Get vehicle by name | vehicles | {"name": "test vehicle"} | 1 |
| Get all camera sensors | sensors | {"type": "camera"} | 2, 4 |
| Get all logs of the vehicle | logs | {"vehicle": 1} | 10 ... 19 |
| Get all streams for the radar sensor | streams | {"sensor": 3} | 30 ... 39 |
| Get all camera samples of all camera sensor streams stream | samples | {"stream": [20, ... , 29]} | All samples for those streams |
| Get all logs that have algorithm results version 1.0 | streams logs | streams = {"algorithm": 5} logs = {"_id": streams.log} | 10, 11 |

It may also be possible to query for specific stream types, for example for sensor streams, algorithm streams or annotation streams. There may be many, more complex queries possible, however the above examples may be sufficient to give a first impression. The database MongoDB (and its interface Mongoose) may also allow for options in addition to queries. Using, for example, a "populate option" may shorten the last query in the table above to streams = {query = {"algorithm": 5}, options = {"populate": "log"}} which would result in all streams that are being returned to also replace the log identifier with the actual database entry.

Further optimization may be done for queries and data consistency due to the schema or entity choices described herein. For example, indexes may be used for faster queries. Indexes may support an efficient execution of queries since without indexes, a database (for example a MongoDB) may perform a collection scan over every document in the collection to match the ones fulfilling the query. An index may limit an amount of documents that need to be scanned. On the other hand, said indexes may require part of the storage for storing, but compared to the actual document storage, this effect may be negligible if suitable fields of configuration data in the entities are chosen. While choosing to build an index for all possible fields and values of those fields of documents or entries of the configuration data may be possible, it will be understood that it is optional.

Indexes may also be used to automatically order data (ascending, descending, etc.), which may return the data in an ordered fashion for certain queries. Additionally, automatic uniqueness checks may be implemented on indexes or compounds of indexes. Each of the configuration data of the entities described herein (sensor configuration data, vehicle configuration data, logging configuration data, stream configuration data, sample configuration data, algorithm configuration data) may include a uniqueness index. It may be advantageous to build indexes upon reference fields and unique identifiers like timestamp, names, identifiers or versions.

Thus, for example an index may be built upon the reference to at least one stream identifier of the sample configuration data, such that the samples may be found more efficiently when querying for raw data of a certain stream. Additionally, when combining the references to at least one stream identifier with the sample time data of the sample configuration data to a compound index of both "reference to at least one stream identifier" and "sample time data" the sample configuration data may be stored and ordered for "reference to at least one stream identifier" followed by the "sample time data" accordingly. The order may be important as samples may be grouped first by streams and then may be put into a "sample time data" order for each data stream. The index may support querying for either field, or both fields at the same time.

The index description above may be just an example of how the schema structure (or entity structure) of streams and samples as described herein may help querying for specific data fast, while also keeping the data structured inside the database (data warehouse). For example, the algorithm configuration data may further include a partial uniqueness compound index on the algorithm name data and on the algorithm version data, respectively. The logging configuration data may further include a partial uniqueness compound index on the references to the at least one vehicle identifier and on the logging start time data, respectively. The sample configuration data may further include a compound index on the reference to at least one stream identifier and on the sample time data, respectively. The sensor configuration data may further include a partial uniqueness compound index on the sensor name data, on the sensor type identifier, on the sensor hardware data, on the sensor software data, on the sensor software data and on the sensor time data, respectively. The stream configuration data may further include a regular index on the reference to at least one log identifier. The vehicle configuration data may further include a partial uniqueness compound index on the vehicle identification data and the vehicle time data, respectively. There may be further indexes included in the configuration data.

Validators may be used in form of pre-hooks or post-hooks that can be attached when for example saving a document. A pre-save hook may be a hook before a document is saved, while a post hook or a post-update hook for example may run after a document has been updated. During executing the pre-hooks or post-hooks, it may be possible to validate or invalidate a document or perform various tasks to modify the database in an autonomous fashion.

A validation may enable various features in combination with the entity structure described herein. In general, validators may improve an integrity and a consistency of the database. Validators may be used for the following crucial features. An optional inheritable structure may be introduced to the hooks that may allow calling validators of their base classes. This means that pre-hooks or post-hooks for validation may be defined on e.g. a binary sample which can then be executed for sub binary samples like a camera sample or a video sample.

Validators may be used for a deletion of all "Container Elements" when the container object is deleted. In the first place, the above structure of a log entity, a stream entity and a sample entity may allow modification and deletion of only a subset of the data stored in the entities. However, a deletion of a log without first deleting the streams and samples the log refers to may result into dangling objects that refer to a non-existent object and might get forgotten and clogging up space of the database. For this reason, a pre-remove hook may be added. The pre-remove hook may delete also all objects that refer to this object when removing for example a log or a stream. Therefore, a stream will first delete all attached samples before deleting the actual stream object.

Validators may further be used for preventing deletion of referenced documents. In contrast to container objects being deleted, referenced objects that add extra information may not be able to be deleted if they are still referenced. An example may be a sensor that is still referenced by a vehicle. If the sensor would be deleted, a scene could not be reconstructed anymore and the intrinsic configurations of the raw data would be lost. Therefore, a pre-remove hook may be defined that checks such references and disallows the deletion, before not all objects that are referencing the said object are deleted beforehand.

Validators may further be used for filling server-side metadata: An example would be the addition of metadata for "binary samples". A user, when posting the data to the server, does not need to know where the binary data is stored on server side. Therefore, the server may save the binary data inside the blob storage and add information like the "binary address data" or "binary compression data" used on its own.

Validators may further be used for a general validation of data values and ranges which may be a use case for validation. For example, a range of float values may be restricted inside the database to be positive, for example the size of an object that should not be negative. There may be a long list of validation for fields of all possible types. A general validation may check that the reference identifiers given on all reference fields (for example a reference to a stream identifier in the sample configuration data) are pointing to valid objects.

In addition to the pre-hooks and post-hooks for validation, also a validation system may be implemented to establish more general hooks on server side that may be used for providing further information to existing documents or modifying dependencies of those documents.

The validation system may include a registration of events to call hooks upon. An exemplary event may be a "finalization" of a log or of a stream, which is setting the boolean field logging status data or the boolean field stream status data to "true". When all sensor streams are finalized, the log may also be finalized. When a log is finalized, metadata may be calculated and injected or added to the log. The metadata may include: if GPS data is present, a geo lookup that may be done to determine the country and city of the recording drive; if camera data is present, a thumbnail URL for the log may be extracted from the first camera image; on algorithmic stream finalization, statistics of the objects present in the stream may be calculated and appended to the stream (e.g. number of objects, tracks and classes). The validation system may further include allowing registering and saving callback URLs of microservices listening to certain server events. The server events may include a finalization event of a log or a stream as described above, but may also be extended to any other event done on the server. Microservices may then be notified when a certain event may be hit and the registered callback URL may be called with the identifier of the object that triggered the event.

The system 100 described herein may offer a database designed for fast queries, high schema (or entity) flexibility and may also keep storage space in check. Enforcing a uniform data structure in form of schemas (or entities) may be important, as the uniform data structure may enable sharing data and results between teams and may not require raw data specific parsers and long periods of communication or blaming of responsibilities.

The system 100 and the data formats of the entities may offer capabilities to store all relevant advanced driver-assistance systems (ADAS) data in a common format as well as sensor and vehicle intrinsic and extrinsic configurations. The generic data format may enable collaboration and data sharing between data users. The data format may be efficient in a sense that data entries may be separated and may be reused. Also, the data format may match very well to real world vehicle setups and applications and may allow for reconstruction of complete scenes. Thus, resimulations may be possible and may give (ML) scientists the opportunity to easily query the data they need. The data format may also add the option to extend logs with algorithm and annotation results after a sensor upload. Additionally, storing algorithmic data, the settings used and the capabilities of versioning them may allow (ML) experts to compare and track their progress and may allow for a more data-driven work-style.

However, choosing these data format and a NoSQL database may come with a downside of data consistency and lookup speed of data. Using indexes and validators may overcome the downsides and may optimize query speed, integrity and consistency. An inheritable plugin/hook interface may be used for validating the data as well as using the indexes as mentioned for improving faster lookups for bigger data storage. Adding further hook capabilities on top may enhance the metadata information for users and may allow for automatization through microservices. The hooks may also help with cleaning up the data and keep the data consistent for deletion: For example, when a log is deleted, any data entries that may be "attached" to the deleted log should also be deleted, otherwise, those data entries may be stuck and refer to objects that no longer exist.

The schemas (or entities) described herein may also easily be extended to contain more fields.

As described herein, to tackle the problem of efficiently storing ADAS data and ML data a NoSQL database (for example: MongoDB database) may be used for saving metadata schemas or entities on a disk. An additional blob storage may be used for saving compressed sensor binary data in a separate, cheaper storage component than the NoSQL database of the metadata schemas or entities.

The data schemas (in other words: data entities) may be defined in such a way that data duplication may be avoided by using references, and therefore reuse of document entries may be provided. Furthermore, sensor configurations and vehicle configurations as well as calibrations may be reproducible. Recordings, streams and datatypes may be grouped together and atomic data entries may be synchronized by a global timestamp. Algorithmic results and their settings may be stored and versioned. Subtypes may further flesh out the data stored depending on use-cases and optimization, validation and consistency may become possible for stored data.

### Reference numeral list

- 100: system for storing data of driver-assistance systems of vehicles
- 102: sensor entity
- 104: vehicle entity
- 106: log entity
- 108: algorithm entity
- 110: sample entity
- 112: stream entity
- 114: relationship between vehicle entity and sensor entity
- 116: relationship between vehicle entity and log entity
- 118: relationship between log entity and stream entity
- 120: relationship between algorithm entity and stream entity
- 122: relationship between stream entity and sample entity
- 124: relationship between stream entity and sensor entity
- 130: optional relationship
- 132: multiplicity of many
- 134: mandatory relationship
- 136: multiplicity of one

- 200: diagram illustrating further specifications of the system
- 202: sample type
- 204: binary sample
- 206: sensor type
- 208: sensor stream
- 210: algorithm stream
- 212: annotation stream
- 214: dependent stream
- 216: aggregation
- 218: composition
- 220: inheritance

- 300: diagram illustrating an example of the system
- 302: vehicle configuration data
- 304: sensor configuration data of a first sensor
- 306: sensor configuration data of a second sensor
- 308: sensor configuration data of a third sensor
- 310: algorithm configuration data of a first algorithm
- 312: algorithm configuration data of a second algorithm
- 314: logging configuration data of a first log
- 316: logging configuration data of a second log
- 318: logging configuration data of a third log
- 320: logging configuration data of a fourth log
- 322: logging configuration data of a fifth log
- 324: logging configuration data of a sixth log
- 326: logging configuration data of a seventh log
- 328: logging configuration data of an eight log
- 330: logging configuration data of a ninth log
- 332: logging configuration data of a tenth log
- 334: stream configuration data of a camera sensor stream
- 336: stream configuration data of a radar sensor stream
- 338: stream configuration data of a first algorithm stream
- 340: stream configuration data of a second algorithm stream
- 342: stream configuration data of a third algorithm stream

## Claims

1. A computer system (100) for storing data of driver-assistance systems of vehicles, the system (100) comprising:
a database storing a plurality of entities that define a schema of the system, the plurality of entities comprising:
a sensor entity (102), wherein the sensor entity (102) is configured to store, for each of at least one sensor mounted on a vehicle, respective sensor configuration data (304) comprising a respective sensor identifier;
a vehicle entity (104), wherein the vehicle entity (104) is configured to store, for each of at least one vehicle, respective vehicle configuration data (302) comprising a respective vehicle identifier and a reference to at least one sensor identifier;
a log entity (106), wherein the log entity (106) is configured to store, for each of at least one log, respective logging configuration data (314) comprising a respective log identifier and a reference to at least one vehicle identifier;
a stream entity (112), wherein the stream entity (112) is configured to store, for each of at least one stream, respective stream configuration data (334) comprising a respective stream identifier, and a reference to at least one log identifier, wherein at least one of the streams is a sensor stream (208), wherein the stream configuration data (334) of the sensor stream (208) further comprises a reference to at least one sensor identifier, wherein at least one of the streams is a dependent stream (214), wherein the respective stream configuration data of each dependent stream (214) further comprises a respective reference to at least one other stream;
a sample entity (110), wherein the sample entity (110) is configured to store, for each of at least one sample, respective sample configuration data, comprising a respective sample identifier and a reference to at least one stream identifier;
an algorithm entity (108), wherein the algorithm entity (108) is configured to store, for each of at least one algorithm, respective algorithm configuration data (310) comprising an algorithm identifier, wherein at least one of the dependent streams (214) is an algorithm stream (210), wherein the stream configuration data of the algorithm stream (210) further comprises a reference to at least one algorithm identifier, and wherein the algorithm entity (108) is stored in the database; and
at least one validator,
wherein the at least one validator comprises a pre-hook and/or a post-hook,
wherein the pre-hook and/or the post-hook is a function that is automatically executed in response to a database operation on at least one of the stored entities,
wherein the sensor configuration data (304), the vehicle configuration data (302), the logging configuration data (314), the stream configuration data (334), and the sample configuration data is used for driver-assistance systems.

2. The computer system (100) of claim 1,
wherein the database is a NoSQL database, preferably a MongoDB database.

3. The computer system (100) of at least one of claims 1 to 2,
wherein the sensor configuration data (304) further comprises at least one of: sensor name data, sensor number data, sensor hardware data, sensor software data, sensor time data, sensor sample-type data, sensor status data, and/or sensor calibration data; and/or
wherein the vehicle configuration data (302) further comprises at least one of: vehicle name data, vehicle identification data, vehicle time data, vehicle sensor data, vehicle sensor calibration data, vehicle sensor calibration status data, vehicle sensor connection data, vehicle dimension data, and/or vehicle coordinate system data; and/or
wherein the logging configuration data (314) further comprises at least one of: logging origin data, logging start time data, logging end time data, and/or logging status data; and/or
wherein the stream configuration data (334) further comprises at least one of: stream sample data, stream status data, stream duration data, stream start time data and/or stream end time data; and/or
wherein the sample configuration data further comprises sample time data.

4. The computer system (100) of at least one of claims 1 to 3,
wherein at least two of the sensor configuration data (304), the vehicle configuration data (302), the logging configuration data (314), the stream configuration data (334), and the sample configuration data comprise a common timestamp and are synchronized using the common timestamp.

5. The computer system (100) of at least one of claims 1 to 4,
wherein each of the sensor entity (102), the vehicle entity (104), the log entity (106), the sample entity (110), and the stream entity (112) comprises at least one index,
wherein the at least one index is used to query and/or order the sensor configuration data (304), the vehicle configuration data (302), the logging configuration data (314), the sample configuration data, and the stream configuration data (334) respectively.

6. The computer system (100) of at least one of claims 1 to 5,
wherein at least one of the samples is a binary sample (204), wherein the sample configuration data of the binary sample (204) comprises a reference to binary data of the at least one sensor, preferably measurement data of the at least one sensor; and
wherein the sample configuration data comprises a sample type identifier.

7. The computer system (100) of claim 6,
wherein at least one portion of the binary data is stored in a storage component different to the database, wherein preferably the storage component is a cloud storage.

8. The computer system (100) of at least one of claims 6 to 7,
wherein the sample configuration data of the binary sample (204) further comprises at least one of: binary name data, binary address data, binary type data, binary check data, binary size data, binary status data, binary compress data, binary compress check data, and/or binary compress size data, and/or
wherein the sample type identifier comprises at least one of: BSON sample type, bounding box sample type, CDC sample type, camera sample type, cuboid sample type, custom sample type, egomotion sample type, GPS sample type, host sample type, lane sample type, pointcloud sample type, radar sample type, semantic segmentation sample type, and/or video sample type.

9. The computer system (100) of at least one of claims 1 to 8,
wherein the sensor configuration data (304) further comprises a sensor type identifier,
wherein the sensor type identifier comprises at least one of: camera sensor type, GPS sensor type, host sensor type, lidar sensor type, and/or radar sensor type.

10. The computer system (100) of claim 9,
wherein the algorithm configuration data (310) uses a timestamp for synchronizing with at least one of the sensor configuration data (304), the vehicle configuration data (302), the logging configuration data (314), the sample configuration data, and the stream configuration data (334); and/or
wherein the algorithm entity (108) further comprises at least one index,
wherein the at least one index is used to query and/or order the algorithm configuration data (310).

11. The computer system (100) of claim 10,
wherein the algorithm configuration data (310) further comprises at least one of: algorithm name data, algorithm description data, algorithm version data, algorithm repository data, algorithm commit data, and/or algorithm information data.

12. The computer system (100) of claim 1,
wherein the pre-hook is configured to initiate compressing data captured by the at least one sensor before storing the compressed data to the sample entity (110) of the database or in a different storage component; and/or wherein the post-hook is configured to initiate deleting any stream of the stream entity (112) comprising a reference to a log of the log entity (106) if the log is deleted.

13. The computer system (100) of at least one of claims 1 to 12,
wherein the at least one sensor comprises at least one of: a lidar sensor, a radar sensor, a camera sensor, a GPS sensor, or host sensor.

## Patentansprüche

1. Computersystem (100) zum Speichern von Daten von Fahrerassistenzsystemen von Fahrzeugen, wobei das System (100) Folgendes umfasst:
eine Datenbank, die eine Vielzahl von Entitäten speichert, die ein Schema des Systems definieren, wobei die Vielzahl von Entitäten Folgendes umfasst:
eine Sensorentität (102), wobei die Sensorentität (102) konfiguriert ist, um für jeden von mindestens einem an einem Fahrzeug montierten Sensor jeweilige Sensorkonfigurationsdaten (304) zu speichern, die eine jeweilige Sensorkennung umfassen;
eine Fahrzeugentität (104), wobei die Fahrzeugentität (104) konfiguriert ist, um für jedes von mindestens einem Fahrzeug jeweilige Fahrzeugkonfigurationsdaten (302) zu speichern, die eine jeweilige Fahrzeugkennung und einen Verweis auf mindestens eine Sensorkennung umfassen;
eine Protokollentität (106), wobei die Protokollentität (106) konfiguriert ist, um für jedes von mindestens einem Protokoll jeweilige Protokollierungskonfigurationsdaten (314) zu speichern, die eine jeweilige Protokollkennung und einen Verweis auf mindestens eine Fahrzeugkennung umfassen;
eine Streamentität (112), wobei die Streamentität (112) konfiguriert ist, um für jeden von mindestens einem Stream jeweilige Streamkonfigurationsdaten (334) zu speichern, die eine jeweilige Streamkennung und einen Verweis auf mindestens eine Protokollkennung umfassen, wobei mindestens einer der Streams ein Sensorstream (208) ist, wobei die Streamkonfigurationsdaten (334) des Sensorstreams (208) ferner einen Verweis auf mindestens eine Sensorkennung umfassen,
wobei mindestens einer der Streams ein abhängiger Stream (214) ist, wobei die jeweiligen Streamkonfigurationsdaten jedes abhängigen Streams (214) ferner einen jeweiligen Verweis auf mindestens einen anderen Stream umfassen;
eine Probenentität (110), wobei die Probenentität (110) konfiguriert ist, um für jede von mindestens einer Probe jeweilige Probenkonfigurationsdaten zu speichern, die eine jeweilige Probenkennung und einen Verweis auf mindestens eine Streamkennung umfassen;
eine Algorithmusentität (108), wobei die Algorithmusentität (108) konfiguriert ist, um für jeden von mindestens einem Algorithmus jeweilige Algorithmuskonfigurationsdaten (310) zu speichern, die eine Algorithmuskennung umfassen, wobei mindestens einer der abhängigen Streams (214) ein AlgorithmusStream (210) ist, wobei die Streamkonfigurationsdaten des AlgorithmusStreams (210) ferner einen Verweis auf mindestens eine Algorithmuskennung umfassen und wobei die Algorithmusentität (108) in der Datenbank gespeichert ist; und
mindestens einen Validator,
wobei der mindestens eine Validator einen Pre-Hook und/oder einen Post-Hook umfasst, wobei der Pre-Hook und/oder der Post-Hook eine Funktion ist, die als Reaktion auf eine Datenbankoperation an mindestens einer der gespeicherten Entitäten automatisch ausgeführt wird,
wobei die Sensorkonfigurationsdaten (304), die Fahrzeugkonfigurationsdaten (302), die Protokollierungskonfigurationsdaten (314), die Streamkonfigurationsdaten (334) und die Probenkonfigurationsdaten für Fahrerassistenzsysteme verwendet werden.

2. Computersystem (100) nach Anspruch 1,
wobei die Datenbank eine NoSQL-Datenbank, vorzugsweise eine MongoDB-Datenbank, ist.

3. Computersystem (100) nach mindestens einem der Ansprüche 1 bis 2, wobei die Sensorkonfigurationsdaten (304) ferner mindestens eines von Folgendem umfassen: Sensornamendaten, Sensornummerndaten, Sensorhardwaredaten, Sensorsoftwaredaten, Sensorzeitdaten, Sensorprobentypdaten, Sensorstatusdaten und/oder Sensorkalibrierungsdaten; und/oder
wobei die Fahrzeugkonfigurationsdaten (302) ferner mindestens eines von Folgendem umfassen: Fahrzeugnamendaten, Fahrzeugidentifikationsdaten, Fahrzeugzeitdaten, Fahrzeugsensordaten, Fahrzeugsensorkalibrierungsdaten, Fahrzeugsensorkalibrierungsstatusdaten, Fahrzeugsensorverbindungsdaten, Fahrzeugabmessungsdaten und/oder Fahrzeugkoordinatensystemdaten; und/oder
wobei die Protokollierungskonfigurationsdaten (314) ferner mindestens eines von Folgendem umfassen: Protokollierungsursprungsdaten, Protokollierungsstartzeitdaten, Protokollierungsendzeitdaten und/oder Protokollierungsstatusdaten; und/oder
wobei die Streamkonfigurationsdaten (334) ferner mindestens eines von Folgendem umfassen: Streamprobendaten, Streamstatusdaten, Streamdauerdaten, Streamstartzeitdaten und/oder Streamendzeitdaten; und/oder
wobei die Probenkonfigurationsdaten ferner Probenzeitdaten umfassen.

4. Computersystem (100) nach mindestens einem der Ansprüche 1 bis 3,
wobei mindestens zwei der Sensorkonfigurationsdaten (304), der Fahrzeugkonfigurationsdaten (302), der Protokollierungskonfigurationsdaten (314), der Streamkonfigurationsdaten (334) und der Probenkonfigurationsdaten einen gemeinsamen Zeitstempel umfassen und unter Verwendung des gemeinsamen Zeitstempels synchronisiert sind.

5. Computersystem (100) nach mindestens einem der Ansprüche 1 bis 4, wobei jede der Sensorentität (102), der Fahrzeugentität (104), der Protokollentität (106), der Probenentität (110) und der Streamentität (112) mindestens einen Index umfasst,
wobei der mindestens eine Index verwendet wird, um die Sensorkonfigurationsdaten (304), die Fahrzeugkonfigurationsdaten (302), die Protokollierungskonfigurationsdaten (314), die Probenkonfigurationsdaten bzw. die Streamkonfigurationsdaten (334) abzufragen und/oder zu ordern.

6. Computersystem (100) nach mindestens einem der Ansprüche 1 bis 5, wobei mindestens eine der Proben eine binäre Probe (204) ist, wobei die Probenkonfigurationsdaten der binären Probe (204) einen Verweis auf binäre Daten des mindestens einen Sensors, vorzugsweise Messdaten des mindestens einen Sensors, umfassen; und
wobei die Probenkonfigurationsdaten eine Probentypkennung umfassen.

7. Computersystem (100) nach Anspruch 6,
wobei mindestens ein Teil der binären Daten in einer Speicherkomponente gespeichert ist, die sich von der Datenbank unterscheidet, wobei die Speicherkomponente vorzugsweise ein Cloud-Speicher ist.

8. Computersystem (100) nach mindestens einem der Ansprüche 6 bis 7,
wobei die Probenkonfigurationsdaten der binären Probe (204) ferner mindestens eines von Folgendem umfassen: Binärnamendaten, Binäradressdaten, Binärtypdaten, Binärprüfdaten, Binärgrößendaten, Binärstatusdaten, Binärkomprimierungsdaten, Binärkomprimierungsprüfdaten und/oder Binärkomprimierungsgrößendaten, und/oder
wobei die Probentypkennung mindestens eines von Folgendem umfasst:
BSON-Probentyp, Bounding-Box-Probentyp, CDC-Probentyp, Kameraprobentyp, Würfelprobentyp, kundenspezifischer Probentyp, Eigenbewegungsprobentyp, GPS-Probentyp, Hostprobentyp, Spurprobentyp, Punktwolkenprobentyp, Radarprobentyp, Probentyp für semantische Segmentierung und/oder Videoprobentyp.

9. Computersystem (100) nach mindestens einem der Ansprüche 1 bis 8,
wobei die Sensorkonfigurationsdaten (304) ferner eine Sensortypkennung umfassen,
wobei die Sensortypkennung mindestens eines von Folgendem umfasst:
Kamerasensortyp, GPS-Sensortyp, Hostsensortyp, Lidarsensortyp und/oder Radarsensortyp.

10. Computersystem (100) nach Anspruch 9,
wobei die Algorithmuskonfigurationsdaten (310) einen Zeitstempel zum Synchronisieren mit mindestens einem der Sensorkonfigurationsdaten (304), der Fahrzeugkonfigurationsdaten (302), der Protokollierungskonfigurationsdaten (314), der Probenkonfigurationsdaten und der Streamkonfigurationsdaten (334) verwenden; und/oder
wobei die Algorithmusentität (108) ferner mindestens einen Index umfasst,
wobei der mindestens eine Index verwendet wird, um die Algorithmuskonfigurationsdaten (310) abzufragen und/oder zu ordern.

11. Computersystem (100) nach Anspruch 10,
wobei die Algorithmuskonfigurationsdaten (310) ferner mindestens eines von Folgendem umfassen: Algorithmusnamendaten, Algorithmusbeschreibungsdaten, Algorithmusversionsdaten, Algorithmusverwahrungsdaten, **Al**gorithmusdurchführungsdaten und/oder Algorithmusinformationsdaten.

12. Computersystem (100) nach Anspruch 1,
wobei der Pre-Hook konfiguriert ist, um das Komprimieren von Daten zu initiieren, die von dem mindestens einen Sensor erfasst werden, bevor die komprimierten Daten in der Probenentität (110) der Datenbank oder in einer anderen Speicherkomponente gespeichert werden; und/oder
wobei der Post-Hook konfiguriert ist, um das Löschen eines beliebigen Streams der Streamentität (112) zu initiieren, der einen Verweis auf ein Protokoll der Protokollentität (106) umfasst, wenn das Protokoll gelöscht wird.

13. Computersystem (100) nach mindestens einem der Ansprüche 1 bis 12, wobei der mindestens eine Sensor mindestens eines von Folgendem umfasst: einen Lidarsensor, einen Radarsensor, einen Kamerasensor, einen GPS-Sensor oder einen Hostsensor.

## Revendications

1. Système informatique (100) destiné à stocker des données de systèmes d'aide à la conduite de véhicules, le système (100) comprenant :
une base de données stockant une pluralité d'entités qui définissent un schéma du système, la pluralité d'entités comprenant :
une entité capteurs (102), dans lequel l'entité capteurs (102) est configurée pour stocker, pour chacun d'au moins un capteur monté sur un véhicule, des données de configuration de capteur respectives (304) comprenant un identifiant de capteur respectif ;
une entité véhicules (104), dans lequel l'entité véhicules (104) est configurée pour stocker, pour chacun d'au moins un véhicule, des données de configuration de véhicule respectives (302) comprenant un identifiant de véhicule respectif et une référence à au moins un identifiant de capteur ;
une entité journaux (106), dans lequel l'entité journaux (106) est configurée pour stocker, pour chacun d'au moins un journal, des données de configuration de journalisation respectives (314) comprenant un identifiant de journal respectif et une référence à au moins un identifiant de véhicule ;
une entité flux (112), dans lequel l'entité flux (112) est configurée pour stocker, pour chacun d'au moins un flux, des données de configuration de flux respectives (334) comprenant un identifiant de flux respectif et une référence à au moins un identifiant de journal, dans lequel au moins un des flux est un flux de capteur (208), dans lequel les données de configuration de flux (334) du flux de capteur (208) comprennent en outre une référence à au moins un identifiant de capteur, dans lequel au moins un des flux est un flux dépendant (214), dans lequel les données de configuration de flux respectives de chaque flux dépendant (214) comprennent en outre une référence respective à au moins un autre flux ;
une entité échantillons (110), dans lequel l'entité échantillons (110) est configurée pour stocker, pour chacun d'au moins un échantillon, des données de configuration d'échantillon respectives, comprenant un identifiant d'échantillon respectif et une référence à au moins un identifiant de flux ;
une entité algorithmes (108), dans lequel l'entité algorithmes (108) est configurée pour stocker, pour chacun d'au moins un algorithme, des données de configuration d'algorithme respectives (310) comprenant un identifiant d'algorithme, dans lequel au moins un des flux dépendants (214) est un flux d'algorithme (210), dans lequel les données de configuration de flux du flux d'algorithme (210) comprennent en outre une référence à au moins un identifiant d'algorithme, et dans lequel l'entité algorithmes (108) est stockée dans la base de données ; et
au moins un validateur,
dans lequel ledit au moins un validateur comprend un pré-hook et/ou un post-hook, dans lequel le pré-hook et/ou le post-hook sont des fonctions qui sont automatiquement exécutées en réponse à une opération de base de données sur au moins une des entités stockées,
dans lequel les données de configuration de capteur (304), les données de configuration de véhicule (302), les données de configuration de journalisation (314), les données de configuration de flux (334) et les données de configuration d'échantillon sont utilisées pour des systèmes d'aide à la conduite.

2. Système informatique (100) selon la revendication 1,
dans lequel la base de données est une base de données NoSQL, de préférence une base de données MongoDB.

3. Système informatique (100) selon au moins l'une des revendications 1 à 2,
dans lequel les données de configuration de capteur (304) comprennent en outre au moins l'une des données suivantes : données de nom de capteur, données de numéro de capteur, données de matériel de capteur, données de logiciel de capteur, données de temps de capteur, données de type d'échantillon de capteur, données d'état de capteur et/ou données d'étalonnage de capteur ; et/ou
dans lequel les données de configuration de véhicule (302) comprennent en outre au moins l'une des données suivantes : données de nom de véhicule, données d'identification de véhicule, données de temps de véhicule, données de capteur de véhicule, données d'étalonnage de capteur de véhicule, données d'état d'étalonnage de capteur de véhicule, données de connexion de capteur de véhicule, données de dimensions de véhicule et/ou données de système de coordonnées de véhicule ; et/ou
dans lequel les données de configuration de journalisation (314) comprennent en outre au moins l'une des données suivantes : données d'origine de journalisation, données d'heure de début de journalisation, données d'heure de fin de journalisation et/ou données d'état de journalisation ; et/ou
dans lequel les données de configuration de flux (334) comprennent en outre au moins l'une des données suivantes : données d'échantillon de flux, données d'état de flux, données de durée de flux, données d'heure de début de flux et/ou données d'heure de fin de flux ; et/ou
dans lequel les données de configuration d'échantillon comprennent en outre des données de temps d'échantillon.

4. Système informatique (100) selon au moins l'une des revendications 1 à 3,
dans lequel au moins deux des données de configuration de capteur (304), des données de configuration de véhicule (302), des données de configuration de journalisation (314), des données de configuration de flux (334) et des données de configuration d'échantillon comprennent un horodatage commun et sont synchronisées à l'aide de l'horodatage commun.

5. Système informatique (100) selon au moins l'une des revendications 1 à 4,
dans lequel chacune de l'entité capteurs (102), de l'entité véhicule (104), de l'entité journaux (106), de l'entité échantillons (110) et de l'entité flux (112) comprend au moins un index,
dans lequel ledit au moins un index est utilisé pour interroger et/ou ordonner respectivement les données de configuration de capteur (304), les données de configuration de véhicule (302), les données de configuration de journalisation (314), les données de configuration d'échantillon et les données de configuration de flux (334).

6. Système informatique (100) selon au moins l'une des revendications 1 à 5,
dans lequel au moins un des échantillons est un échantillon binaire (204), dans lequel les données de configuration d'échantillon de l'échantillon binaire (204) comprennent une référence aux données binaires dudit au moins un capteur, de préférence les données de mesure dudit au moins un capteur ; et
dans lequel les données de configuration d'échantillon comprennent un identifiant de type d'échantillon.

7. Système informatique (100) selon la revendication 6,
dans lequel au moins une partie des données binaires est stockée dans un composant de stockage différent de la base de données, dans lequel le composant de stockage est de préférence un stockage en nuage.

8. Système informatique (100) selon au moins l'une des revendications 6 à 7,
dans lequel les données de configuration d'échantillon de l'échantillon binaire (204) comprennent en outre au moins l'une des données suivantes : données de nom binaire, données d'adresse binaire, données de type binaire, données de vérification binaire, données de taille binaire, données d'état binaire, données de compression binaire, données de vérification de compression binaire et/ou données de taille de compression binaire, et/ou
dans lequel l'identifiant de type d'échantillon comprend au moins l'un des types suivants : type d'échantillon BSON, type d'échantillon boîte englobante, type d'échantillon CDC, type d'échantillon caméra, type d'échantillon cuboïde, type d'échantillon personnalisé, type d'échantillon egomotion, type d'échantillon GPS, type d'échantillon hôte, type d'échantillon voie, type d'échantillon nuage de points, type d'échantillon radar, type d'échantillon segmentation sémantique et/ou type d'échantillon vidéo.

9. Système informatique (100) selon au moins l'une des revendications 1 à 8,
dans lequel les données de configuration de capteur (304) comprennent en outre un identifiant de type de capteur,
dans lequel l'identifiant de type de capteur comprend au moins l'un des types suivants : type de capteur caméra, type de capteur GPS, type de capteur hôte, type de capteur lidar et/ou type de capteur radar.

10. Système informatique (100) selon la revendication 9,
dans lequel les données de configuration d'algorithme (310) utilisent un horodatage pour se synchroniser avec au moins l'une des données suivantes : données de configuration de capteur (304), données de configuration de véhicule (302), données de configuration de journalisation (314), données de configuration d'échantillon et données de configuration de flux (334) ; et/ou
dans lequel l'entité algorithme (108) comprend en outre au moins un index, dans lequel ledit au moins un index est utilisé pour interroger et/ou ordonner les données de configuration d'algorithme (310).

11. Système informatique (100) selon la revendication 10,
dans lequel les données de configuration d'algorithme (310) comprennent en outre au moins l'une des données suivantes : données de nom d'algorithme, données de description d'algorithme, données de version d'algorithme, données de référentiel d'algorithme, données de validation d'algorithme et/ou données d'informations d'algorithme.

12. Système informatique (100) selon la revendication 1,
dans lequel le pré-hook est configuré pour initier la compression des données capturées par ledit au moins un capteur avant de stocker les données compressées dans l'entité échantillons (110) de la base de données ou dans un composant de stockage différent ; et/ou
dans lequel le post-hook est configuré pour initier la suppression de tout flux de l'entité flux (112) comprenant une référence à un journal de l'entité journaux (106) si le journal est supprimé.

13. Système informatique (100) selon au moins l'une des revendications 1 à 12,
dans lequel ledit au moins un capteur comprend au moins l'un des capteurs suivants : capteur lidar, capteur radar, capteur caméra, capteur GPS ou capteur hôte.
